# EUROPÄISCHE PATENTSCHRIFT

(11) **EP 2 062 421 B1**
(45) Veröffentlichungstag und Bekanntmachung des Hinweises auf die Patenterteilung: **30.11.2016**
(21) Anmeldenummer: 07803319.8
(22) Anmeldetag: 07.09.2007
(51) Int. Cl.: H04L 29/06, H04L 9/08, H04L 9/32, H04L 12/22, H04W 12/04, H04W 12/06

(54) **VERFAHREN UND SYSTEM ZUM KONTINUIERLICHEN ÜBERTRAGEN VON VERSCHLÜSSELTEN DATEN EINES BROADCAST-DIENSTES AN EIN MOBILES ENDGERÄT**
METHOD AND SYSTEM FOR THE CONTINUOUS TRANSMISSION OF ENCRYPTED DATA OF A BROADCAST SERVICE TO A MOBILE TERMINAL
PROCÉDÉ ET SYSTÈME DE TRANSMISSION CONTINUE DE DONNÉES CODÉES D'UN SERVICE DE DIFFUSION À UN TERMINAL MOBILE

(30) Priorität: 11.09.2006 DE 102006042554
(43) Veröffentlichungstag der Anmeldung: 27.05.2009
(73) Patentinhaber: Siemens Aktiengesellschaft, 80333 München (DE)
(72) Erfinder: GÜNTHER, Christian, 85579 Neubiberg (DE)
(86) Internationale Anmeldenummer: PCT/EP2007/059365
(87) Internationale Veröffentlichungsnummer: WO 2008/031762

(56) Entgegenhaltungen:
- EP-A- 1 422 875
- WO-A-00/49827
- US-A1- 2005 154 895

## Beschreibung

Verfahren und System zum kontinuierlichen Übertragen von verschlüsselten Daten eines Broadcast-Dienstes an ein mobiles Endgerät

Die Erfindung betrifft ein Verfahren und ein System zum kontinuierlichen Übertragen von verschlüsselten Daten eines Broadcast-Dienstes an ein mobiles Endgerät, welches von einem Dienstezugangsnetz mit einer ersten Schlüsselhierarchie zu einem anderen Dienstezugangsnetz mit einer zweiten Schlüsselhierarchie wechselt.

Bei Punkt-zu-Mehrpunkt-Datendiensten werden insbesondere Multimedia-Daten, wie beispielsweise Audio- und Videodaten von einem Server eines Content Providers bzw. Diensteanbieters an ein Endgerät übertragen. Handelt es sich bei dem Endgerät um ein mobiles Endgerät bzw. Benutzerendgerät BEG, wie beispielsweise um ein mobiles Telefon oder um einen Laptop, erfolgt die Datenübertragung von dem Server des Diensteanbieters über ein Dienstezugangsnetz DZN bzw. Service Access Network und von dort über eine Funkschnittstelle zu dem mobilen Endgerät. Es sind verschiedene Multicast- bzw. Zugangstechnologien bekannt, die jeweils verschiedene Prozeduren zum Authentisieren und Registrieren von Teilnehmern einsetzen und damit den Zugang zur Multicast- bzw. Broadcast-Diensten steuern. Beispiele für derartige bekannte Broadcast-Technologien sind das in dem 3GPP (Third Generation Partnership Project) spezifizierte Multimedia Broadcast- und Multicast-System (MBMS), DVB-H (Digital Video Broadcast to Handhelds)-System auf Basis des Internetprotokolls IP, abgekürzt DVB-H IPDC (DC: Data Cast), das 3GPP2 BCMCS-System (Third Generation Partnership Project 2-Broadcast Multicast Service) und das OMA BCAST (Browser and Content Broadcast) des Standardisierungsgremiums der Open Mobile Alliance (OMA). Diese unterschiedlichen Zugangstechnologien zur Bereitstellung von Broadcast- bzw. Multicast-Diensten für mobile Endgeräte verwenden insbesondere unterschiedliche Schlüsselhierarchien zum Verschlüsseln von Datenübertragungsstrecken.

Die unterschiedlichen Dienstezugangsnetze weisen teilweise überlappende Abdeckungsbereiche auf, sodass sich ein mobiles Endgerät von einem Abdeckungs- bzw. Sendebereich eines ersten Dienstezugangsnetzes zu einem Sendebereich eines zweiten Dienstezugangsnetzes mit einer unterschiedlichen Zugangstechnologie bewegen kann. Mobile Endgeräte bzw. Benutzerendgeräte BEG können unterschiedliche Zugangstechnologien unterstützen, um die entsprechenden Broadcast-Dienste zu empfangen.

Das vom Standardisierungsgremium Third Generation Partnership Project (3GPP) spezifizierte Multimedia Broadcast Multicast System (MBMS) realisiert IP-basierte Punkt-zu-Mehrpunkt Datendienste in 3GPP Mobilfunknetzen (3GPP MBMS ARC). Beispiele solcher Datendienste sind Audio-, Video- und Sprachdienste (Streaming Services), aber auch Dienste, mit deren Hilfe Bilder und Texte zu Endgeräten ausgestrahlt werden (Download und so genannte Carousel Services). Neben dem Radio Access Network (RAN), den Serving und Gateway GPRS Support Nodes (SGSN und GGSN), sind das Benutzerendgerät (User Equipment - UE) und der Broadcast-Multicast Service Center (BM-SC) die wichtigsten MBMS Netzwerkkomponenten. Der eigentliche Dateninhalt wird dem BM-SC von einem Content Provider (ContProv) zur Verfügung gestellt.

MBMS Streaming-Dienste, bei denen unbefugte Nutzung verhindert werden soll, können mit Hilfe des Secure Realtime Transport Protocols (SRTP) verschlüsselt und gegen Veränderung geschützt werden (Integritätsschutz). Diese Funktion wird vom BM-SC übernommen (3GPP MBMS SEC). Dazu muss kryptographisches Schlüsselmaterial am BM-SC sowie an den dazu berechtigen Benutzerendgeräten (UE) zur Verfügung gestellt werden. Aus Effizienzgründen kann ein bestimmter MBMS Streaming Service nicht für jedes einzelne Endgerät separat geschützt und ausgestrahlt werden; vielmehr teilen sich BM-SC und die berechtigten Endgeräte so genannte MBMS Traffic Keys (MTK). MTKs wechseln häufig, sind aber nicht spezifisch für ein bestimmtes Endgerät.

Damit MTKs nicht selbst auf ihrem Weg vom BM-SC zu den mobilen Endgeräten BEG abgehört werden können, werden sie mit Hilfe so genannter MBMS Service Keys (MSK) verschlüsselt. MSKs sind erheblich langlebiger als MTKs und müssen deshalb weniger häufig als MTKs zu den UEs übermittelt werden. Selbstverständlich müssen auch MSKs während ihres Transports zu den BEGs gegen Abhören geschützt werden. Dies wird mit Hilfe so genannter MBMS User Keys (MUK) bewerkstelligt. Im Unterschied zu MTKs und MSKs, ist ein einzelner MUK nur für ein einzelnes Endgerät BEG gültig. Das bedeutet, dass ein MSK, der mit einem bestimmten MUK verschlüsselt ausgesendet wird, auch nur von dem Endgerät BEG entschlüsselt werden kann, das diesen MUK kennt.

MUKs werden zwischen dem Endgerät BEG und dem BM-SC mit Hilfe der so genannten Generic Bootstrapping Architecture (GBA) ausgehandelt. Bei der GBA handelt es sich um ein von der 3GPP spezifiziertes Verfahren, um aus der zwischen dem Endgerät BEG und dem Mobilfunknetz ohnehin bestehenden Sicherheitsbeziehung eine Sicherheitsbeziehung zwischen dem Endgerät BEG und einer so genannten Network Application Function (NAF) abzuleiten (3GPP GBA). Im Zusammenhang mit MBMS übernimmt der BM-SC die Rolle dieser NAF.

Unabhängig von MBMS teilen sich das Endgerät BEG und ein Home Subscriber Server (HSS) im Heimatnetz des BEGs einen langlebigen, geheimen Schlüssel K, der auf der Universal Integrated Circuit Card (UICC) des BEGs und in einer Datenbank des HSS-Servers gespeichert ist. Auf Basis dieses Schlüssels K authentisieren sich das Endgerät BEG und die dafür zuständige GBA Komponente mit dem Namen Bootstrapping Server Function (BSF) gegenseitig. Dabei versorgt der HSS-Server die BSF mit den relevanten, zum Teil Endgerät-spezifischen Daten (Zh, Referenzpunkt). Im Zusammenhang mit dieser Authentisierung leiten das Endgerät BEG und BSF einen geheimen Schlüssel Ks ab, der der Erzeugung eines Schlüssels Ks_NAF dient, der von der Identität der NAF abhängt. Auf Anfrage teilt der Bootstrapping-Server BSF der NAF (im MBMS-Beispiel: dem BM-SC) diesen Ks_NAF mit (Zn Referenzpunkt), sodass sich anschließend das Endgerät und NAF einen geheimen kryptographischen Schlüssel teilen, nämlich Ks_NAF. Insgesamt wird also auf Basis der bestehenden Sicherheitsbeziehung zwischen Endgerät und Mobilfunknetz (Schlüssel K) eine Sicherheitsbeziehung zwischen dem Endgerät UE bzw. BEG und der NAF etabliert (Schlüssel Ks_NAF).

Bei MBMS leiten Endgerät und BM-SC aus Ks_NAF einen so genannten MBMS Request Key (MRK) ab, mit dessen Hilfe sich das Endgerät beim BM-SC authentisiert (Ua Referenzpunkt). Damit erhält das UE die Autorisierung zum Empfang eines bestimmten MBMS-Dienstes. Diese Autorisierung bewirkt, dass der BM-SC dem Endgerät einen MBMS Service Key (MSK) zuschickt, der mit Hilfe eines aus MRK abgeleiteten MBMS User Keys (MUK) verschlüsselt ist. Wie oben bereits erwähnt, ist jetzt nur das Endgerät, das den aus MRK abgeleiteten MUK besitzt, in der Lage, den MSK zu entschlüsseln. Mit Hilfe von MSK aber kann das Endgerät die nicht endgeräte-spezifischen MBMS Traffic Keys (MTK) und damit den gesamten, SRTP-geschützten MBMS Streaming-Dienst entschlüsseln und die Integrität der Daten überprüfen. Somit beruht die Sicherheit von 3GPP MBMS auf der folgenden Schlüsselhierarchie:
Langlebiger 3GPP-Schlüssel K
   - nur dem BEG und einem HSS im Heimatnetz des BEG bzw. UE bekannt
   - dient bei GBA zur Authentisierung zwischen BEG und BSF GBA-Schlüssel Ks und Ks_NAF
   - Ks wird im Zusammenhang mit der GBA-Authentisierungsprozedur zwischen BEG und dem Heimatnetz des BEG abgeleitet und dient der Erzeugung des Schlüssels Ks_NAF
   - bei MBMS werden aus Ks_NAF die Schlüssel MRK und MUK abgeleitet
MBMS Request Key (MRK)
   - von BEG und BM-SC abgeleitet aus Ks_NAF
   - dient zur Authentisierung und Autorisierung des BEG gegenüber NAF = BM-SC bei der Diensteregistrierung MBMS User Key (MUK)
   - abgeleitet aus Ks_NAF
   - dient zur BEG-spezifischen Verschlüsselung von MSK MBMS Service Key (MSK)
   - von BM-SC für einen bestimmten Service generiert
   - dient zur Verschlüsselung von MTKs beim Transport zu den BEGs
   - ist länger gültig als MTKs
MBMS Traffic Keys (MTK)
   - von BM-SC generierte Schlüssel zum Schutz (Verschlüsselung und Integritätsschutz) eines MBMS-Dienstes
   - nicht BEG-spezifisch
   - werden mit Hilfe von MSK verschlüsselt an BEGs übertragen

Das Standardisierungsgremium Digital Video Broadcast (DVB) hat Spezifikationen herausgegeben, die Video-Broadcast-Dienste zu mobilen Endgeräten BEG (DVB to Handhelds - DVB-H) auf Basis des Internet-Protokolls (IP) definieren: IP Data Cast over DVB-H, abgekürzt IPDC/DVB-H (DVB IPDC). Dabei verfügt das DVB-H-System nicht nur über eine unidirektionalen Broadcast-Kanal (Broadcast Channel), sondern auch über einen optionalen, bidirektionalen Interaktionskanal (Interactive Channel), der z. B. durch ein 3GPP-Mobilfunknetz realisiert werden kann.

Das DVB-H-Dokument "IP Data Cast over DVB-H: Service Purchase and Protection" (DVB IPDC SPP) spezifiziert zwei unterschiedliche Sicherheitssysteme für DVB-H-Dienste:
System 1: Open Security Framework (OSF)
   - empfiehlt die Verschlüsselung von Broadcast-Diensten auf der Ebene der Dateninhalte (ISMACryp)
System 2: 18 Crypt
   - empfiehlt die Verschlüsselung von Broadcast-Diensten auf der Transportebene (SRTP) oder der Netzwerkebene (IPSec)

Benutzerendgeräte BEG, die der SPP-Spezifikation entsprechen, müssen alle drei Verschlüsselungsmethoden (ISMACryp, SRTP, IPSec) unterstützen, und mindestens eines der beiden Systeme implementieren.

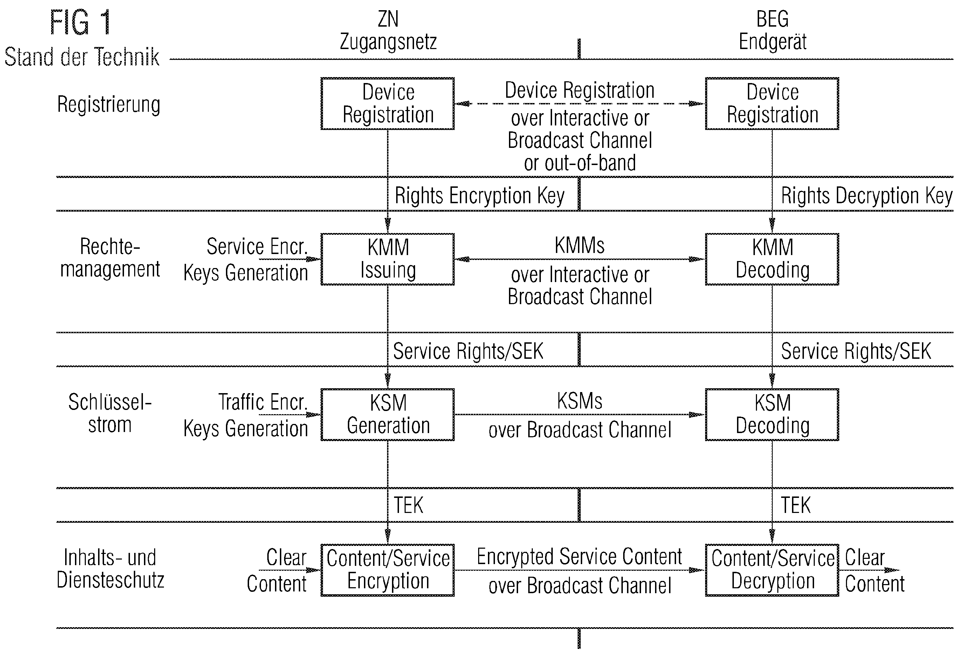

Figur 1 zeigt ein DVB-H-Modell zum Schutz von Dateninhalten bei Broadcast-Diensten nach dem Stand der Technik.

Zunächst benötigt das Endgerät BEG (Device) einen langlebigen Schlüssel K, der für dieses Gerät eindeutig ist. Ein solcher Schlüssel befindet sich in der Regel bereits beim Kauf auf dem Gerät oder auf einer Chipkarte, die in das Gerät eingefügt wird. Dieser Schlüssel bildet das Fundament für die Sicherheit der vier Schichten, die in Figur 1 dargestellt sind.

Auf der obersten Schicht (Registration) authentisiert sich das Endgerät (Device) mit Hilfe eines eindeutigen Schlüssels K und registriert sich für einen bestimmten Broadcast-Dienst. Auf Basis einer erfolgreichen Authentisierung und Registrierung erhält das Endgerät einen kryptographischen Schlüssel (Rights Encryption Key), der zum Empfang des Dienstes notwendig ist. Der Rights Encryption Key ist mit Hilfe des gerätespezifischen Schlüssels K verschlüsselt, so dass nur das Endgerät, das diesen Schlüssel K besitzt, den Rights Encryption Key entschlüsseln kann.

Auf der zweiten Schicht (Rights Management) erhält das Endgerät einen längere Zeit gültigen Service Encryption Key (SEK), der mit Hilfe einer Key Management Message (KMM) zum Endgerät übertragen wird. Der SEK ist eindeutig für den Broadcast-Dienst, nicht aber für das Endgerät. Der Rights Encryption dient zur Verschlüsselung von SEK. In seiner Funktionalität ist SEK mit dem 3GPP-MBMS-Service Key (MSK) vergleichbar.

Auf der dritten Schicht (Key Stream) transportieren so genannte Key Stream Messages (KSM) kurzlebige Traffic Encryption Keys (TEK) über den Broadcast-Kanal zu den Endgeräten. Dabei sind die TEKs mit dem Service Encryption Key (SEK) verschlüsselt, der zuvor auf der zweiten Schicht übertragen wurde. Auf der untersten Schicht (Content/Service Protection) wird der Broadcast-Dienst - verschlüsselt mit Hilfe der TEKs - über den Broadcast-Kanal ausgestrahlt.

Mit Hilfe seines gerätespezifischen Schlüssels K kann das Endgerät den Rights Encryption Key entschlüsseln, damit wiederum den SEK und nachfolgend die häufig wechselnden TEKs. Damit ist das registrierte und folglich autorisierte Endgerät BEG in der Lage, den verschlüsselten Broadcast-Dienst im Klartext darzustellen.

Das in Figur 1 dargestellte Modell beschreibt die technische Realisierung der Schutzmaßnahmen von IPDC/DVB-H auf einem sehr allgemeinen Niveau. Dies hängt zum einen damit zusammen, dass dieses in [DVB IPDC SPP] angegebene Modell die beiden doch sehr unterschiedlichen Systeme Open Security Framework und 18Crypt einheitlich darstellt. Zum anderen wird in [DVB IPDC SPP] die technische Realisierung der Schichten 1-3 (Registration, Rights Management und Key Stream) für das Open Security Framework nicht explizit spezifiziert, sondern offen gelassen - im Gegensatz zum 18Crypt System, für das sämtliche Schichten definiert wurden.

Das 18Crypt System basiert auf Verfahren zum Digitalen Rechtemanagement (DRM), die von der Open Mobile Alliance (OMA) spezifiziert wurden [OMA DRM]. Es verwendet als eindeutigen Geräteschlüssel einen öffentlichen Verschlüsselungsschlüssel, dessen Bindung an ein bestimmtes Gerät durch ein digitales Zertifikat verbürgt wird. Zur Authentisierung und Registrierung des Geräts auf der Registrierungsschicht überprüft ein so genannter Rechteherausgeber (Rights Issuer - RI) die Gültigkeit des digitalen Gerätezertifikats. Im Erfolgsfall sendet der RI dem Gerät auf der Rights Management Schicht ein so genanntes Rechteobjekt (RO) zu. Dieses RO enthält einen Service oder Programme Encryption Key (SEK/PEK), der mit Hilfe des überprüften, öffentlichen Geräteschlüssels verschlüsselt ist. Nur das in dem digitalen Zertifikat angegebenen Gerät verfügt über den korrespondierenden privaten Geräteschlüssel. Es ist deshalb das einzige Gerät, das den verschlüsselten SEK bzw. PEK in jenem Rechtsobjekt RO entschlüsseln kann.

Neben SEK bzw. PEK enthält das Rechtsobjekt RO in der Regel noch die Beschreibung von Rechten, die dem Gerät gewährt werden in Bezug auf den Dateninhalt des Broadcast-Dienstes, für das sich das Gerät registriert hat (z. B.: Video darf fünfmal vom Endgerät abgespielt werden). Auf dem Endgerät ist ein gegen Veränderung geschütztes Programm (DRM Agent) verantwortlich für die Entschlüsselung von SEK bzw. PEK, für die Einhaltung der Rechte, die dem Gerät in Bezug auf einen bestimmten Dateninhalt gewährt wurden, und für den Schutz von SEK bzw. PEK gegen unberechtigten Zugriff. Der SEK bzw. PEK wird auf der Key Stream-Schicht verwendet, um häufig wechselnde Traffic Encryption Keys (TEK) zu ver- und entschlüsseln.

In Mobilfunknetzen, die den Standards des Third Generation Partnership Project 2 (3GPP2) entsprechen, werden IP-basierte Broadcast- und Multicast-Dienste mit Hilfe des Broadcast-Multicast-Service (BCMCS) realisiert [3GPP2 BCMCS]. 3GPP2-Benutzerendgeräte (Mobile Station - MS) bestehen aus einem User Identity Module (UIM) und dem eigentlichen Mobilgerät (Mobile Equipment - ME). Eine UIM kann entweder fest an das ME gebunden oder herausnehmbar sein (Removable UIM - R-UIM). Während UIMs zwar einen geschützten Speicherbereich, aber nur wenig Rechenleistung besitzen, verfügt das Mobilgerät ME über mehr Rechenleistung, aber keinen geschützten Speicherbereich.

Zum Verschlüsseln der Broadcast/Multicast-Dateninhalte kann das Secure Real-time Transport Protocol (SRTP) verwendet werden. Die Schlüssel, die als Eingabe für die SRTP-Verschlüsselung dienen, werden Short-term Keys (SK) genannt. Ebenso wie 3GPP MBMS Traffic Keys (MTK) wechseln sie häufig, werden aber nicht wie MTKs verschlüsselt an die mobilen Stationen MSs geschickt. Stattdessen wird ein verschlüsselter Broadcast Access Key (BAK) zusammen mit einer Zufallszahl SK_RAND an die mobilen Endgeräte bzw. MSs geschickt, und die mobilen Endgeräte BEG bzw. MS berechnen aus BAK und SK_RAND den Schlüssel SK. Bei BAK handelt es sich um einen nicht MS-oder UIM-spezifischen Schlüssel; vielmehr ist BAK für einen oder mehrere IP-Multicast-Nachrichtenflüsse gültig. BAKs werden von der Netzwerkkomponente BAK Distributor (BAKD) erzeugt.

Auf seinem Weg zu einem mobilen Endgerät BEG bzw. MS wird ein BAK mit Hilfe eines Temporary Encryption Keys (TK) verschlüsselt. Jeder TK hängt von einer Zufallszahl TK_RAND und einem so genannten Registration Key (RK) ab. Dabei ist RK eindeutig für jede UIM und nur der betreffenden UIM sowie der Netzwerkkomponente bekannt, die für die Erzeugung von TKs verantwortlich ist (Subscription Manager - SM). Das mobile Endgerät erhält zusammen mit dem durch TK verschlüsselten BAK auch den Zufallswert TK_RAND. Nur dasjenige mobile Endgerät, das auf seiner UIM über den RK verfügt, der zur Erzeugung von TK herangezogen wurde, kann dann mit Hilfe von TK_RAND den Schlüssel TK ableiten. TK dient dem mobilen Endgerät zum Entschlüsseln von BAK. Mit Hilfe von BAK und SK_RAND kann die MS bzw. das BEG dann SK berechnen und damit die verschlüsselten Multicast-Daten entschlüsseln.

Die Sicherheit von 3GPP2 BC MCS beruht auf folgender Schlüsselhierarchie:
Registration Key (RK)
   - Eindeutig für jede UIM
   - Nur der UIM und dem Subscription Manager (SM) bekannt Temporary Encryption Key (TK)
   - Abgeleitet aus RK und einer Zufallszahl TK_RAND
   - Dient zur Verschlüsselung eines Broadcast Access Keys (BAK)
   - MS erhält TK_RAND zusammen mit dem verschlüsselten BAK
   - Nur MS mit dem richtigen RK kann TK mit Hilfe von TK_RAND berechnen
Broadcast Access Key (BAK)
   - Wird vom BAK Distributor (BAKD) für einen oder mehrere IP-Multicast-Nachrichtenflüsse erzeugt
   - MS erhält BAK verschlüsselt mit TK zusammen mit einer Zufallszahl SK_RAND
Short-term Keys (SK)
   - Schlüssel zum Verschlüsseln (SRTP) von Broadcast/Multicast-Daten
   - Wird nicht an MS geschickt, sondern von MS aus BAK und SK_RAND berechnet

Die Broadcast (BCAST) -Unterarbeitsgruppe der Browser and Content (BAC) -Arbeitsgruppe des Standardisierungsgremiums Open Mobile Alliance (OMA) standardisiert einen so genannten Enabler für Mobile Broadcast Services, die über Netze mit einem uni-direktionalen Broadcast-Kanal (z. B. DVB-H) und einem optionalen, bi-direktionalen Unicast-Kanal (z. B. 3GPP) angeboten werden [OMA BCAST ARC]. Dabei werden Funktionen wie Service Guide, File Distribution, Stream Distribution, Service Protection, Content Protection, Service Interaction, Service Provisioning, Terminal Provisioning and Notification spezifiziert.

In den aktuellen Entwurfsspezifikationen unterstützt OMA BAC BCAST insbesondere 3GPP MBMS, DVB-H IPDC und 3GPP2 BCMCS als Broadcastverteilungssysteme. Der Schutz von Broadcast-Diensten (Services) und Inhalten (Content) ist in [OMA BCAST SCP] definiert und bietet drei Ausprägungen an, nämlich ein DRM-Profil, das auf den OMA-Spezifikationen für Digitales Rechtemanagement [OMA DRM] beruht, und zwei Smartcard-Profile auf Basis von 3GPP (U)SIM bzw. 3GPP2 (R)UIM.

WO0049827 offenbart ein Verfahren zum sicheren Wechseln eines mobilen Endgerätes von einem ersten zu einem zweiten Zugangspunkt, beide verbunden an einem gemeinsamen Festnetzwerk.

Aufgrund der unterschiedlichen Zugangstechnologien und insbesondere aufgrund der unterschiedlichen Schlüsselhierarchien, die bei den verschiedenen Zugangstechnologien eingesetzt werden, besteht bei einem Wechsel eines mobilen Endgeräts BEG von einem ersten Dienstezugangsnetz zu einem zweiten Dienstezugangsnetz das Problem, dass die Datenübertragung unterbrochen wird.

Der Wechsel von einem Dienstezugangsnetz zu einem anderen Dienstezugangsnetz kann entweder dadurch geschehen, dass sich ein mobiles Endgerät aus dem Sendebereich eines ersten Dienstezugangsnetzes in den Sendebereich eines zweiten Dienstezugangsnetzes bewegt oder der Teilnehmer einen Wechsel von einem ersten Dienstezugangsnetz zu einem anderen Dienstezugangsnetz wünscht.

Es ist daher eine Aufgabe der vorliegenden Erfindung, ein Verfahren und ein System zum Übertragen von verschlüsselten Daten eine Broadcast-Dienstes zu schaffen, die eine kontinuierliche Datenübertragung von Daten eines Broadcast-Dienstes zu einem mobilen Endgerät gewährleisten, selbst wenn das Dienstezugangsnetz gewechselt wird.

Diese Aufgabe wird erfindungsgemäß durch ein Verfahren mit den im Patentanspruch 1 angegebenen Merkmalen, durch ein System mit den im Patentanspruch 19 angegebenen Merkmalen und durch einen Zugangskontrollserver mit den im Patentanspruch 22 angegebenen Merkmalen gelöst.

Die Erfindung schafft ein Verfahren zum kontinuierlichen Übertragen von verschlüsselten Daten eines Broadcast-Dienstes von Dienstezugangsnetzen, die unterschiedliche Schlüsselhierarchien aufweisen, an ein mobiles Endgerät (BEG), wobei das mobile Endgerät (BEG) bei einem Wechsel von einem ersten Dienstezugangsnetz DZN-A, von dem das mobile Endgerät BEG die Daten des Broadcast-Dienstes mit einem ersten Dateninhaltsverschlüsselungsschlüssel MTK, TEK, SK verschlüsselt empfängt, zu einem zweiten Dienstezugangsnetz DZN-B, von dem das mobile Endgerät BEG die Daten des gleichen Broadcast-Dienstes mit einem zweiten Dateninhaltsverschlüsselungsschlüssel MTK, TEK, SK verschlüsselt empfängt, einen mit einem teilnehmerspezifischen Schlüssel MUK, K-PUB, TK des ersten Dienstezugangsnetzes DZN-A verschlüsselten Schlüssel der Schlüsselhierarchie des zweiten Dienstezugangsnetzes DZN-B empfängt.

Bei einer bevorzugten Ausführungsform des erfindungsgemäßen Verfahrens wird der teilnehmerspezifische Schlüssel (MUK, TK) im Anschluss an eine Authentisierung des mobilen Endgeräts (BEG) bei einem Zugangskontrollserver (ZKS-A) des ersten Dienstezugangsnetzes (DZN-A) erzeugt.

Bei einer Ausführungsform des erfindungsgemäßen Verfahrens verfügen das mobile Endgerät (BEG) und der Zugangskontrollserver (ZKS-A) des ersten Dienstezugangsnetzes (DZN-A) beide über den teilnehmerspezifischen Schlüssel.

Bei einer bevorzugten Ausführungsform des erfindungsgemäßen Verfahrens empfängt das mobile Endgerät BEG die Daten des Broadcast-Dienstes mit dem ersten Dateninhaltsverschlüsselungsschlüssel von einem ersten Zugangskontrollserver ZKS-A des ersten Dienstezugangsnetzes DZN-A.

Bei einer bevorzugten Ausführungsform des erfindungsgemäßen Verfahrens empfängt das mobile Endgerät BEG die Daten des Broadcast-Dienstes mit dem zweiten Dateninhaltsverschlüsselungsschlüssel von einem zweiten Zugangskontrollserver ZKS-B des zweiten Dienstezugangsnetzes DZN-B.

Bei einer bevorzugten Ausführungsform des erfindungsgemäßen Verfahrens wird der mit dem teilnehmerspezifischen Schlüssel verschlüsselte Schlüssel von dem Zugangskontrollserver ZKS-A des ersten Dienstezugangsnetzes DZN-A an das mobile Endgerät BEG übertragen und durch das mobile Endgerät BEG mittels des dem mobilen Endgerät bekannten teilnehmerspezifischen Schlüssels entschlüsselt.

Bei einer Ausführungsform des erfindungsgemäßen Verfahrens entschlüsselt das mobile Endgerät BEG mittels des entschlüsselten Schlüssels den zweiten Dateninhaltsverschlüsselungsschlüssel, um damit die von dem zweiten Zugangskontrollserver ZKS-B empfangenen und mit dem zweiten Dateninhaltsverschlüsselungsschlüssel verschlüsselten Daten des Broadcast-Dienstes zu entschlüsseln.

Bei einer Ausführungsform des erfindungsgemäßen Verfahrens fordert das mobile Endgerät BEG einen Wechsel von dem ersten Dienstezugangsnetz DZN-A zu dem zweiten Dienstezugangsnetz DZN-B von dem Zugangskontrollserver des ersten Dienstezugangsnetzes ZKS-A mittels einer Anforderungsnachricht an.

Bei einer Ausführungsform des erfindungsgemäßen Verfahrens weist die Anforderungsnachricht eine Teilnehmeridentität, eine Identität des Zugangskontrollservers ZKS-B des zweiten Dienstezugangsnetzes DZN-B und eine Identität des Broadcast-Dienstes auf.

Bei einer Ausführungsform des erfindungsgemäßen Verfahrens überträgt der Zugangskontrollserver ZKS-A des ersten Dienstezugangsnetzes DZN-A eine Zugriffsanforderungsnachricht an den Zugangskontrollserver ZKS-B des zweiten Dienstezugangsnetzes DZN-B, welche die Teilnehmeridentität, die Identität des Broadcast-Dienstes und eine Identität des Zugangskontrollservers ZKS-A des ersten Dienstezugangsnetzes DZN-A enthält.

Bei einer Ausführungsform des erfindungsgemäßen Verfahrens überträgt der Zugangskontrollserver ZKS-B des zweiten Dienstezugangsnetzes DZN-B eine Zugriffsbestätigungsnachricht an den Zugangskontrollserver ZKS-A des ersten Dienstezugangsnetzes DZN-A zurück, welche die Teilnehmeridentität, die Identität des Broadcast-Dienstes und einen Schlüssel der Schlüsselhierarchie des zweiten Dienstezugangsnetzes enthält.

Bei einer Ausführungsform des erfindungsgemäßen Verfahrens überträgt der Zugangskontrollserver ZKS-A des ersten Dienstezugangsnetzes DZN-A eine Wechselbestätigungsnachricht an das mobile Endgerät BEG, welche eine Identität des zweiten Zugangskontrollservers ZKS-B und eine Identität des Broadcast-Dienstes enthält.

Bei einer Ausführungsform des erfindungsgemäßen Verfahrens überträgt der Zugangskontrollserver ZKS-A des ersten Dienstezugangsnetzes DZN-A den mit dem teilnehmerspezifischen Schlüssel verschlüsselten Schlüssel der zweiten Schlüsselhierarchie in einer Nachricht an das mobile Endgerät BEG.

Bei einer Ausführungsform des erfindungsgemäßen Verfahrens wird das erste Dienstezugangsnetz DZN-A durch ein 3GPP-, ein 3GPP2- oder ein DVB-H-Dienstezugangsnetz gebildet.

Bei einer Ausführungsform des erfindungsgemäßen Verfahrens wird das zweite Dienstezugangsnetz DZN-B durch ein 3GPP-, ein 3GPP2- oder ein DVB-H-Dienstezugangsnetz gebildet.

Bei einer Ausführungsform des erfindungsgemäßen Verfahrens wird der Wechsel von dem ersten Dienstezugangsnetz DZN-A zu dem zweiten Dienstezugangsnetz DZN-B durch den Zugangskontrollserver ZKS-A des ersten Dienstezugangsnetzes DZN-A automatisch durchgeführt, wenn sich das mobile Endgerät BEG aus einer Sendereichweite des ersten Dienstezugangsnetzes DZN-A herausbewegt.

Bei einer Ausführungsform des erfindungsgemäßen Verfahrens wird das mobile Endgerät BEG durch ein mobiles Telefon, einen Laptop oder ein PDA-Gerät gebildet.

Bei einer Ausführungsform des erfindungsgemäßen Verfahrens werden die durch das mobile Endgerät BEG empfangenen Daten durch Multimedia-Daten gebildet.

Die Erfindung schafft ferner ein System zum kontinuierlichen Übertragen von verschlüsselten Daten eines Broadcast-Dienstes an ein mobiles Endgerät BEG von Dienstezugangsnetzen DZN, die unterschiedliche Schlüsselhierarchien aufweisen, mit einem ersten Zugangskontrollserver ZKS-A eines ersten Dienstezugangsnetzes DZN-A, welches eine erste Schlüsselhierarchie aufweist, wobei das mobile Endgerät BEG die Daten des Broadcast-Dienstes mit einem ersten Dateninhaltverschlüsselungs-Schlüssel von dem ersten Zugangskontrollserver ZKS-A des ersten Dienstezugangsnetzes DZN-A verschlüsselt empfängt, einem zweiten Zugangskontrollserver ZKS-B eines zweiten Dienstezugangsnetzes DZN-B, welches eine zweite Schlüsselhierarchie aufweist, wobei das mobile Endgerät BEG die Daten des Broadcast-Dienstes mit einem zweiten Dateninhaltsverschlüsselungsschlüssel von dem zweiten Zugangskontrollserver ZKS-B des zweiten Dienstezugangsnetzes DZN-B verschlüsselt empfängt, wobei das mobile Endgerät BEG bei einem Wechsel von dem ersten Dienstezugangsnetz DZN-A zu dem zweiten Dienstezugangsnetz DZN-B einen mit einem teilnehmerspezifischen Schlüssel des ersten Dienstezugangsnetzes DZN-A verschlüsselten Schlüssel der Schlüsselhierarchie des zweiten Dienstezugangsnetzes DZN-B erhält.

Die Erfindung schafft ferner einen Zugangskontrollserver ZKS zum Bereitstellen eines kontinuierlichen Broadcast-Dienstes für ein mobiles Endgerät BEG, wobei der Zugangskontrollserver ZKS bei einem Wechsel des mobilen Endgerätes BEG von einem Dienstezugangsnetz DZN des Zugangskontrollservers ZKS zu einem anderen Dienstezugangsnetz DZN' einen mit einem teilnehmerspezifischen Schlüssel des Dienstezugangsnetzes DZN verschlüsselten Schlüssel des zweiten Dienstezugangsnetzes DZN-B an das mobile Endgerät BEG überträgt.

Im Weiteren werden bevorzugte Ausführungsformen des erfindungsgemäßen Verfahrens und des erfindungsgemäßen Systems zum kontinuierlichen Übertragen von verschlüsselten Daten eines Broadcast-Dienstes unter Bezugnahme auf die beigefügten Figuren zur Erläuterung erfindungswesentlicher Merkmale beschrieben.

Es zeigen:
- Figur 1:: ein Schichtmodell einer herkömmlichen Zugangstechnologie zum Schutz von Dateninhalten bei Broadcast-Diensten nach dem Stand der Technik;
- Figur 2:: ein Blockschaltbild einer möglichen Ausführungsform des erfindungsgemäßen Systems zum kontinuierlichen Übertragen von verschlüsselten Daten;
- Figur 3:: ein Signaldiagramm zur Erläuterung einer ersten Ausführungsform des erfindungsgemäßen Verfahrens zum kontinuierlichen Übertragen von verschlüsselten Daten eines Broadcast-Dienstes;
- Figur 4:: ein weiteres Signaldiagramm zur Erläuterung einer zweiten Ausführungsform des erfindungsgemäßen Verfahrens zum kontinuierlichen Übertragen von verschlüsselten Daten eines Broadcast-Dienstes;
- Figur 5:: ein weiteres Signaldiagramm zur Erläuterung einer dritten Ausführungsform des erfindungsgemäßen Verfahrens zum kontinuierlichen Übertragen von verschlüsselten Daten eines Broadcast-Dienstes;
- Figur 6:: ein weiteres Signaldiagramm zur Erläuterung einer vierten Ausführungsform des erfindungsgemäßen Verfahrens zum kontinuierlichen Übertragen von verschlüsselten Daten eines Broadcast-Dienstes;
- Figur 7:: ein weiteres Signaldiagramm zur Darstellung einer fünften Ausführungsform des erfindungsgemäßen Verfahrens zum kontinuierlichen Übertragen von verschlüsselten Daten eines Broadcast-Dienstes;
- Figur 8:: ein weiteres Signaldiagramm zur Darstellung einer sechsten Ausführungsform des erfindungsgemäßen Verfahrens zum kontinuierlichen Übertragen von verschlüsselten Daten eines Broadcast-Dienstes.

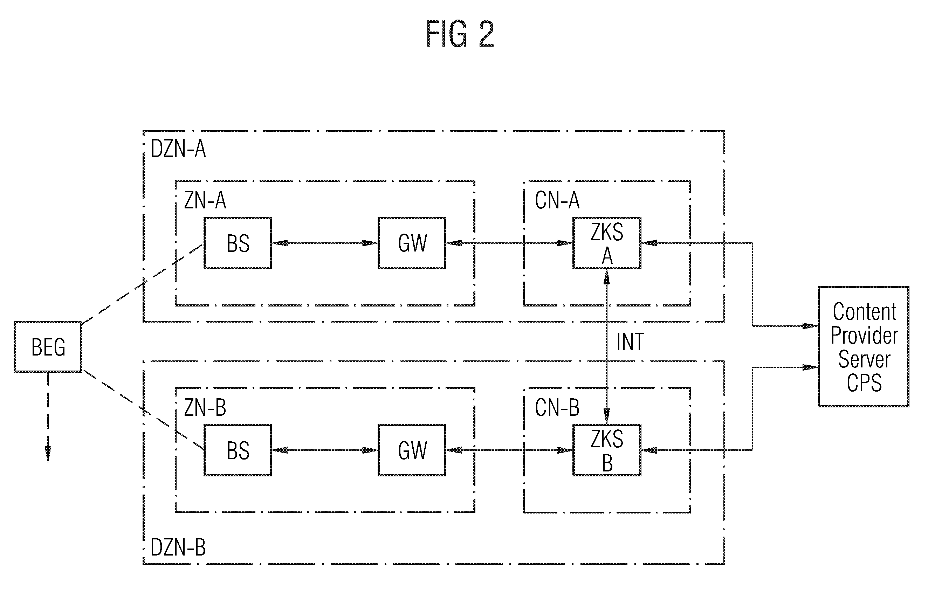

Wie man aus Figur 2 erkennen kann, besteht das erfindungsgemäße System zum kontinuierlichen Übertragen von verschlüsselten Daten eines Broadcast-Dienstes aus mindestens zwei Dienstezugangsnetzen DZN bzw. Service Access Networks. Eines dieser Dienstezugangsnetze enthält mehrere Basisstationen BS, über die ein mobiles Endgerät bzw. Benutzerendgerät BEG Daten mit dem Dienstezugangsnetz DZN über eine Luftschnittstelle austauschen kann. Die Basisstationen BS des Dienstezugangsnetzes DZN sind beispielsweise an ein Gateway GW des Dienstezugangsnetzes angeschlossen. Das Gateway verbindet das Dienstezugangsnetz DZN mit einem Core bzw. Kernnetz CN. In diesem CN befindet sich ein Zugangskontrollserver ZKS, der den Zugang zu Multicast- bzw. Broadcast-Diensten in seinem jeweiligen Zuständigkeitsbereich kontrolliert. Die Zugangskontrollserver ZKS sind beispielsweise an einen Content Provider-Server CPS angeschlossen, der Multimedia-Daten für einen Multicast- oder Broadcast-Dienst bereitstellt. Bei den Broadcast-Diensten kann es sich beispielsweise um die Bereitstellung von Audio-, Video- oder Sprachdiensten (Streaming Services) handeln, aber auch beispielsweise Dienste, mit deren Hilfe Bilder und Text zu den mobilen Endgeräten BEG ausgestrahlt werden können.

Bei dem erfindungsgemäßen System können die beiden Dienstezugangsnetze DZN-A, DZN-B unterschiedliche Zugangstechnologien aufweisen. Beispielsweise kann es sich bei dem ersten Dienstezugangsnetz DZN-A um ein 3GPP-, 3GPP2- oder ein DVB-H-Dienstezugangsnetz handeln. In gleicher Weise kann es sich bei dem zweiten Dienstezugangsnetz DZN-B ebenfalls um ein 3GPP-, 3GPP2- oder ein DVB-H-Dienstezugangsnetz handeln. Das erfindungsgemäße System ermöglicht einen nahtlosen Übergang des mobilen Endgeräts BEG von dem Zuständigkeitsbereich des ersten Zugangskontrollservers ZKS-A, d. h. von dem Dienstezugangsnetz DZN-A, zu dem Zuständigkeitsbereich des zweiten Zugangskontrollservers ZKS-B, d. h. zu dem Dienstezugangsnetz DZN-B. Ein Wechsel von einem ersten Dienstezugangsnetz DZN-A zu dem zweiten Dienstezugangsnetz DZN-B kann beispielsweise durch die Zugangskontrollserver ZKS automatisch durchgeführt werden, wenn sich ein mobiles Endgerät BEG aus der Sendereichweite der Basisstation BS des ersten Dienstezugangsnetzes DZN-A herausbewegt und in das Sendegebiet der Basisstation BS des zweiten Dienstezugangsnetzes DZN-B gelangt. Dazu werden beispielsweise Signalstärken der ausgetauschten Nachrichten überwacht und der Wechsel durch die Zugangskontrollserver ZKS automatisch veranlasst, wenn die Signalamplituden in dem ersten Dienstezugangsnetz DZN-A unter einen gewissen Schwellenwert fallen. Alternativ kann der Wechsel von einem Dienstezugangsnetz DZN-A zu einem anderen Dienstezugangsnetz DZN-B, welches die gleiche oder eine alternative Zugangstechnologie aufweist, durch den Teilnehmer des mobilen Endgerätes BEG veranlasst werden, indem er an dem mobilen Endgerät BEG einen entsprechenden Wechsel einstellt.

Möchte beispielsweise ein Teilnehmer eines mobilen Endgerätes BEG, beispielsweise eines mobilen Telefons, auf seinem Display einen Kinofilm oder einen Fernsehfilm ansehen, der durch den Content Provider CPS angeboten wird, kann er sich über das erste Dienstezugangsnetz DZN-A für diesen Broadcast-Dienst anmelden. Zunächst durchläuft er eine Authentisierungsprozedur und erhält entsprechend der Schlüsselhierarchie der Zugangstechnologie des Dienstezugangsnetzes DZN-A Schlüssel zum Entschlüsseln der verschlüsselten Mediendaten, die es ihm erlauben, beim Empfang der verschlüsselten Mediendaten diese zu entschlüsseln. Dabei werden diese Schlüssel vorzugsweise ihrerseits verschlüsselt übertragen, um ein Abhören zu verhindern. Nach Abschluss dieser Prozedur kann das mobile Endgerät BEG den Datenstrom über das erste Dienstezugangsnetz DZN-A empfangen und entschlüsseln. Begibt sich nun der Teilnehmer mit seinem mobilen Endgerät außerhalb der Reichweite des ersten Dienstezugangsnetzes DZN-A in das Sendegebiet eines anderen Dienstezugangsnetz DZN-B, welches beispielsweise eine andere Zugangstechnologie aufweist, erfolgt mittels des erfindungsgemäßen Systems ein kontinuierlicher, für den Teilnehmer nicht bewusst merkbarer Wechsel von dem ersten Dienstezugangsnetz DZN-A zu dem zweiten Dienstezugangsnetz DZN-B ohne dass das Benutzerendgerät BEG und der zweite Zugangskontrollserver eine komplette, aufwändige und für den Benutzer bzw. Teilnehmer umständliche Diensteregistrierung durchlaufen. In gleicher Weise erfolgt ein Wechsel von einem ersten Dienstezugangsnetz DZN-A zu einem Dienstezugangsnetz DZN-B, sofern der Teilnehmer an seinem mobilen Endgerät BEG eine entsprechende Umschaltung vornimmt, beispielsweise um Gebühren zu sparen, sofern eine Datenübertragung über das zweite Dienstezugangsnetz DZN-B für ihn kostengünstiger ist.

Das mobile Endgerät BEG des Teilnehmers empfängt zunächst die Daten des Broadcast-Dienstes, beispielsweise des von ihm gewünschten Films, mit einem ersten Dateninhaltsverschlüsselungsschlüssel von dem ersten Zugangskontrollserver ZKS-A des ersten Dienstezugangsnetzes DZN-A verschlüsselt.

Bei einem Wechsel des mobilen Endgerätes BEG von dem ersten Dienstezugangsnetz DZN-A zu dem zweiten Dienstezugangsnetz DZN-B erhält das mobile Endgerät BEG einen mit einem teilnehmerspezifischen Schlüssel des ersten Dienstezugangsnetzes verschlüsselten Schlüssel des zweiten Dienstezugangsnetzes DZN-B.

Anschließend bzw. nach dem Wechsel erhält dann das mobile Endgerät BEG die Daten des gleichen Broadcast-Dienstes mit einem zweiten Dateninhaltsverschlüsselungsschlüssel von dem zweiten Zugangskontrollserver ZKS-B des zweiten Dienstezugangsnetz DZN-B in verschlüsselter Form.

Bei dem erfindungsgemäßen System sind die beiden Zugangskontrollserver ZKS-A, ZKS-B über eine gemeinsame Schnittstelle bzw. Interface INT miteinander verbunden und tauschen Nachrichten miteinander aus. Diese Nachrichten enthalten Daten, wie beispielsweise Identifizierer für das mobile Endgerät BEG, für den Teilnehmer selbst, für den Zuständigkeitsbereich des ersten und zweiten Zugangskontrollservers ZKS-A, ZKS-B, für einen oder mehrere Broadcast-Dienste sowie kryptographische Schlüssel und Angaben zu deren Gültigkeitsdauer.

Bei dem erfindungsgemäßen Verfahren authentisiert sich das mobile Endgerät BEG zunächst bei dem ersten Zugangskontrollserver ZKS-A des ersten Dienstezugangsnetzes DZN-A.

Anschließend erhält der erste Zugangskontrollserver ZKS-A einen Schlüssel direkt von dem zweiten Zugangskontrollserver ZKS-B oder indirekt von einem Schlüsselserver, an den der zweite Zugangskontrollserver ZKS-B zuvor diesen Schlüssel übertragen hat.

In einem weiteren Schritt verschlüsselt der erste Zugangskontrollserver ZKS-A den erhaltenen Schlüssel mit Hilfe eines geheimen, symmetrischen Schlüssels, beispielsweise eines teilnehmerspezifischen Schlüssels, welchen nur das mobile Endgerät BEG und der erste Zugangskontrollserver ZKS-A des ersten Dienstezugangsnetzes DZN-A kennen und der auf der Basis des Authentisierungsvorganges des mobilen Endgerätes BEG bei dem ersten Zugangskontrollserver ZKS-A generiert wurde. Alternativ verschlüsselt der erste Zugangskontrollserver ZKS-A den empfangenen Schlüssel mit Hilfe eines öffentlichen, asymmetrischen Schlüssels, dessen Zugehörigkeit zu dem mobilen Endgerät BEG von dem ersten Zugangskontrollserver ZKS-A während der Authentisierung des mobilen Endgeräts BEG überprüft wird.

Anschließend überträgt der erste Zugangskontrollserver ZKS-A den mit dem geheimen symmetrischen Schlüssel oder mit dem öffentlichen asymmetrischen Schlüssel verschlüsselten Schlüssel zu dem mobilen Endgerät BEG.

Das mobile Endgerät BEG entschlüsselt den verschlüsselten Schlüssel mit Hilfe des geheimen symmetrischen Schlüssels oder mit Hilfe des zu dem öffentlichen asymmetrischen Schlüssel gehörenden, geheimen, asymmetrischen Schlüssels, um mit Hilfe des derart entschlüsselten Schlüssels die Schlüssel zur Verschlüsselung der Dateninhalte des Broadcast-Dienstes zu entschlüsseln.

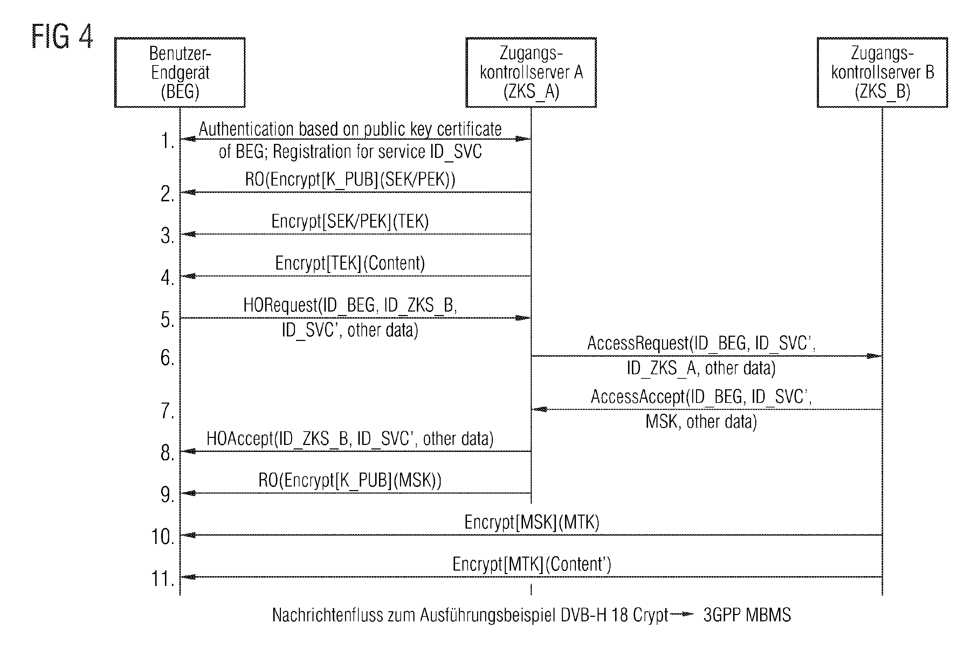

Die nachfolgenden Figuren 4 bis 8 zeigen sechs verschiedene Ausführungsformen des erfindungsgemäßen Verfahrens zum kontinuierlichen Übertragen von verschlüsselten Daten eines Broadcast-Dienstes von Dienstezugangsnetzen DZN mit unterschiedlichen Schlüsselhierarchien an das mobile Endgerät BEG.

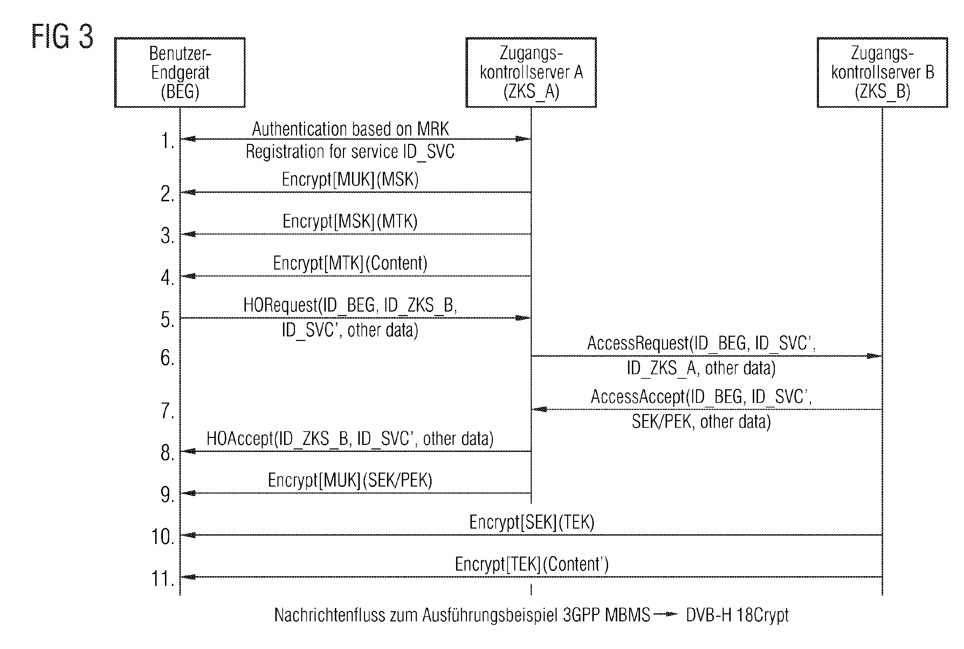

Die sechs Ausführungsbeispiele gemäß Figuren 3 bis 8 zeigen unterschiedliche Fallkonstellationen, bei denen es sich bei den Dienstezugangsnetzen DZN-A, DZN-B um ein 3GPP-, 3GPP2- oder um ein DVB-H-Dienstezugangsnetz handelt.

Bei der in Figur 3 dargestellten Fallkonstellation erfolgt ein Wechsel des mobilen Endgeräts BEG von einem 3GPP-Dienstezugangsnetz zu einem DVB-H-Dienstezugangsnetz.

Nach einem erfolgreichen Durchlauf der 3GPP GBA-Authentisierungsprozedur sind das Benutzerendgerät BEG und der Zugangskontrollserver ZKS_A im Besitz des Schlüssels Ks_NAF, aus dem die Schlüssel MBMS Request Key (MRK) und MBMS User Key (MUK) abgeleitet werden. Mit Hilfe von MRK authentisiert sich BEG gegenüber ZKS_A und registriert sich für den Multicast-Dienst ID_SVC, der in den Zuständigkeitsbereich von ZKS_A fällt. Da sich BEG für den Multicast-Dienst ID_SVC bei ZKS_A erfolgreich registriert hat, sendet ZKS_A den zu diesem Service gehörenden MBMS Service Key (MSK) an BEG, und zwar verschlüsselt mit Hilfe des MBMS User Keys (MUK) von BEG. Mit Hilfe von MUK kann BEG die Nachricht Encrypt [MUK] (MSK) entschlüsseln und somit auch die MBMS Traffic Keys (MTK), die - verschlüsselt mit Hilfe von MSK - an die Benutzerendgeräte gesendet werden. Die entschlüsselten MTKs erlauben es dem BEG nun, denjenigen Multicast-Dienst (Content) zu entschlüsseln, der mit Hilfe dieser MTKs verschlüsselt ist und durch ID_SVC identifiziert wird. Das BEG initiiert eine Übergabe vom Zuständigkeitsbereich des ZKS_A zum ZKS_B, indem es eine Übergabeanfrage (HORequest = Handover Request) an ZKS_A schickt. Diese Nachricht enthält vorteilhafterweise die Identität ID_BEG des Benutzerendgerätes BEG bzw. ID_USER des Benutzers, die Identität ID_ZKS_B von ZKS_B, die Identität ID_SVC' eines Multicast-Dienstes im Zuständigkeitsbereich von ZKS_B, sowie eventuell noch weitere relevante Daten.

Zugunsten des Benutzerendgeräts schickt ZKS_A eine Zugangskontrollanfrage (Access Request) an ZKS_B, die vorteilhafterweise neben den Identitäten ID_BEG, ID_USER, ID_SVC' und ID_ZKS_A eventuell noch weitere relevante Daten enthält. Basierend auf der Tatsache, dass BEG bei ZKS_A bereits erfolgreich authentisiert und registriert ist, kann ZKS_B ohne eine erneute Authentisierung und Registrierung des BEGs entscheiden, ob er BEG-Zugang zum Multicast-Dienst ID_SVC' gewähren will oder nicht. Gewährt ZKS_B dem Benutzerendgerät BEG Zugang zum gewünschten Multicast-Dienst ID_SVC', so sendet er eine Zugangsgewährungsnachricht (Access Accept) an ZKS_A zusammen mit dem Service oder Programme Encryption Key (SEK/PEK), der zu dem gewünschten Multicast-Dienst ID_SVC' gehört. Da ZKS_B dem Benutzerendgerät BEG Zugang zum gewünschten Multicast-Dienst gewährt hat, sendet ZKS_A eine Übergabegewährungsnachricht (HOAccept = Handover Accept) an BEG. Diese Nachricht enthält vorteilhaft die Identitäten ID_ZKS_B und ID_SVC' des Zugangskontrollservers ZKS_B bzw. des gewünschten Dienstes.

ZKS_A sendet an BEG den Schlüssel SEK bzw. PEK, den es von ZKS_B enthalten hat, und zwar verschlüsselt mit MUK. Da das BEG den Schlüssel MUK kennt, kann es SEK bzw. PEK entschlüsseln. Aufgrund seiner Kenntnis von SEK bzw. PEK ist BEG nun in der Lage, die mit SEK bzw. PEK verschlüsselten Traffic Encryption Keys (TEKs) zu entschlüsseln. Die entschlüsselten TEKs erlauben es dem BEG nun, denjenigen Multicast-Dienst (Content) zu entschlüsseln, der mit Hilfe dieser TEKs verschlüsselt ist und durch ID_SVC' identifiziert wird.

Figur 4 zeigt eine zweite Fallkonstellation, bei der ein mobiles Endgerät BEG von einem DVB-H-Dienstezugangsnetz zu einem 3GPP-Dienstezugangsnetz wechselt.

Mit Hilfe seines Public Key Zertifikates authentisiert sich BEG gegenüber ZKS_A und registriert sich für den Multicast-Dienst ID_SVC, der in den Zuständigkeitsbereich von ZKS_A fällt. Da sich BEG für den Multicast-Dienst ID_SVC bei ZKS_A erfolgreich registriert hat, sendet ZKS_A den zu diesem Service gehörenden Service oder Programme Encryption Key (SEK/PEK) an BEG. Dabei ist SEK/PEK in einem Rechteobjekt RO enthalten und liegt dort in verschlüsselter Form vor. Zur Verschlüsselung wird der öffentliche Schlüssel K_PUB von BEG verwendet. Mit Hilfe seines privaten Geräteschlüssels K_PRIV kann BEG den Schlüssel SEK bzw. PEK entschlüsseln und somit auch die Traffic Encryption Keys (TEK), die - verschlüsselt mit Hilfe von SEK bzw. PEK - an die Benutzerendgeräte gesendet werden. Die entschlüsselten TEKs erlauben es dem BEG nun, denjenigen Multicast-Dienst (Content) zu entschlüsseln, der mit Hilfe dieser TEKs verschlüsselt ist und durch ID_SVC identifiziert wird. Das BEG initiiert eine Übergabe vom Zuständigkeitsbereich des ZKS_A zum ZKS_B, in dem es eine Übergabeanfrage (HORequest = Handover Request) an ZKS_A schickt. Diese Nachricht enthält vorteilhaft die Identität ID_BEG des Benutzerendgerätes bzw. ID_USER des Benutzers, die Identität ID_ZKS_B von ZKS_B, die Identität ID_SVC' eines Multicast-Dienstes im Zuständigkeitsbereich von ZKS_B, sowie eventuell noch weitere relevante Daten. Zugunsten des Benutzerendgerätes schickt ZKS_A eine Zugangskontrollanfrage (AccessRequest) an ZKS_B, die vorteilhaft neben den Identitäten ID_BEG, ID_USER, ID_SVC' und ID_ZKS_A eventuell noch weitere relevante Daten enthält. Basierend auf der Tatsache, dass BEG bei ZKS_A bereits erfolgreich authentisiert und registriert ist, kann ZKS_B ohne eine erneute Authentisierung und Registrierung des BEGes entscheiden, ob er BEG Zugang zum Multicast-Dienst ID_SVC' gewähren will oder nicht. Gewährt ZKS_B dem Benutzerendgerät Zugang zum gewünschten Multicast-Dienst ID_SVC', so sendet er eine Zugangsgewährungsnachricht (AccessAccept) an ZKS_A zusammen mit dem MBMS Service Key MSK, der zu dem gewünschten Multicast-Dienst ID_SVC' gehört. Da ZKS_B dem Benutzerendgerät BEG Zugang zum gewünschten Multicast-Dienst gewährt hat, sendet ZKS_A eine Übergabegewährungsnachricht (HOAccept = Handover Accept) an der BEG. Diese Nachricht enthält vorteilhaft die Identitäten ID_ZKS_B und ID_SVC' des Zugangskontrollservers ZKS_B bzw. des gewünschten Dienstes. ZKS_A sendet an BEG den Schlüssel MSK, den es von ZKS_B enthalten hat, und zwar verschlüsselt mit Hilfe von K_PUB als Teil eines Rechteobjekts RO. Unter Verwendung seines privates Geräteschlüssels K_PRIV kann BEG den Schlüssel MSK entschlüsseln. Aufgrund seiner Kenntnis von MSK ist BEG nun in der Lage, die mit MSK verschlüsselten MBMS Traffic Keys (MTKs) zu entschlüsseln. Die entschlüsselten MTKs erlauben es dem BEG nun, denjenigen Multicast-Dienst (Content') zu entschlüsseln, der mit Hilfe dieser MTKs verschlüsselt ist und durch ID_SVC' identifiziert wird.

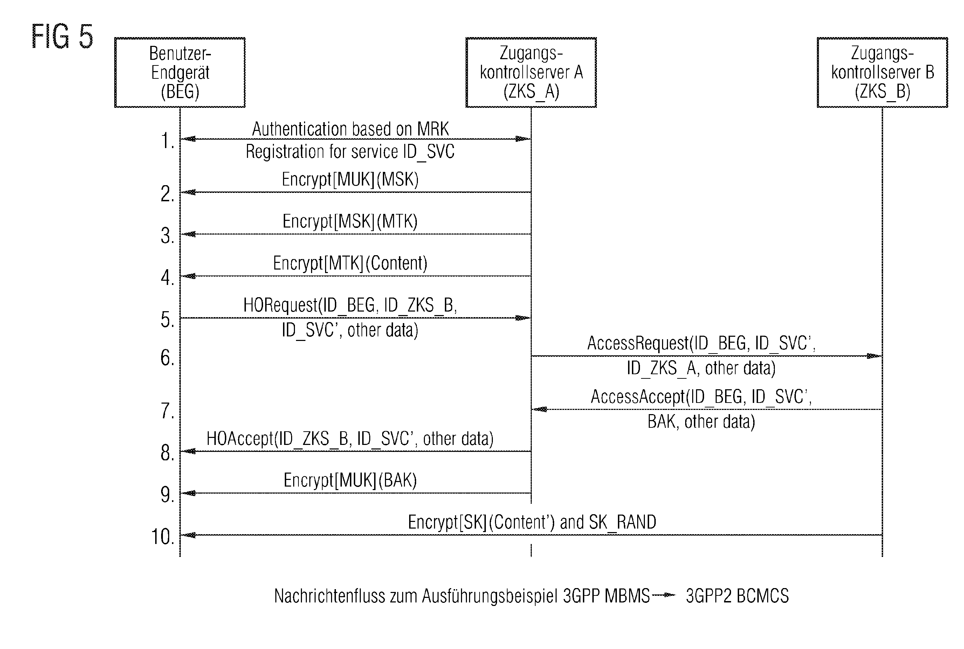

Figur 5 zeigt eine dritte Fallkonstellation, bei der ein mobiles Endgerät BEG von einem 3GPP-Dienstezugangsnetz zu einem 3GPP2-Dienstezugangsnetz wechselt.

Nach einem erfolgreichen Durchlauf der 3GPP GBA Authentisierungsprozedur sind das Benutzerendgerät BEG und der Zugangskontrollserver ZKS_A im Besitz des Schlüssels Ks_NAF, aus dem die Schlüssel MBMS Request Key (MRK) und MBMS User Key (MUK) abgeleitet werden. Mit Hilfe von MRK authentisiert sich BEG gegenüber ZKS_A und registriert sich für den Multicast-Dienst ID_SVC, der in den Zuständigkeitsbereich von ZKS_A fällt. Da sich BEG für den Multicast-Dienst ID_SVC bei ZKS_A erfolgreich registriert hat, sendet ZKS_A den zu diesem Service gehörenden MBMS Service Key (MSK) an BEG, und zwar verschlüsselt mit Hilfe des MBMS User Keys (MUK) von BEG. Mit Hilfe von MUK kann BEG die Nachricht ENcrypt[MUK](MSK) entschlüsseln und somit auch die MBMS Traffic Keys (MTK), die - verschlüsselt mit Hilfe von MSK - an die Benutzerendgeräte gesendet werden. Die entschlüsselten MTKs erlauben es dem BEG nun, denjenigen Multicast-Dienst (Content) zu entschlüsseln, der mit Hilfe dieser MTKs verschlüsselt ist und durch ID_SVC identifiziert wird. Das BEG initiiert eine Übergabe vom Zuständigkeitsbereich des ZKS_A zum ZKS_B, in dem es eine Übergabeanfrage (HORequest = Handover Request) an ZKS_A schickt. Diese Nachricht enthält vorteilhaft die Identität ID_BEG des Benutzerendgerätes bzw. ID_USER des Benutzers, die Identität ID_ZKS_B von ZKS_B, die Identität ID_SVC' eines Multicast-Dienstes im Zuständigkeitsbereich von ZKS_B, sowie eventuell noch weitere relevante Daten. Zugunsten des Benutzerendgerätes schickt ZKS_A eine Zugangskontrollanfrage (AccessRequest) an ZKS_B, die vorteilhaft neben den Identitäten ID_BEG, ID_USER, ID_SVC' und ID_ZKS_A eventuell noch weitere relevante Daten enthält. Basierend auf der Tatsache, dass BEG bei ZKS_A bereits erfolgreich authentisiert und registriert ist, kann ZKS_B ohne eine erneute Authentisierung und Registrierung des BEGes entscheiden, ob er BEG Zugang zum Multicast-Dienst ID_SVC' gewähren will oder nicht. Gewährt ZKS_B dem Benutzerendgerät Zugang zum gewünschten Multicast-Dienst ID_SVC', so sendet er eine Zugangsgewährungsnachricht (AccessAccept) an ZKS_A zusammen mit dem Broadcast Access Key (BAK), der zu dem gewünschten Multicast-Dienst ID_SVC' gehört. Da ZKS_B dem Benutzerendgerät BEG Zugang zum gewünschten Multicast-Dienst gewährt hat, sendet ZKS_A eine Übergabegewährungsnachricht (HOAccept = Handover Accept) an BEG. Diese Nachricht enthält vorteilhaft die Identitäten ID_ZKS_B und ID_SVC' des Zugangskontrollservers ZKS_B bzw. des gewünschten Dienstes. ZKS_A sendet an BEG den Schlüssel BAK, den es von ZKS_B enthalten hat, und zwar verschlüsselt mit MUK. Da das BEG den Schlüssel MUK kennt, kann es BAK entschlüsseln. Das BEG erhält den Multicast-Dienst, der durch ID-SVC' identifiziert und mit Hilfe von Short-term Keys (SK) verschlüsselt ist. Neben dem verschlüsselten Multicast-Dienst erhält BEG auch noch die unverschlüsselten Zufallswerte SK_RAND. Unter Verwendung von BAK und den Zufallszahlen SK_RAND kann das BEG die Short-term Keys SK berechnen und somit den Multicast-Dienst (Content') entschlüsseln.

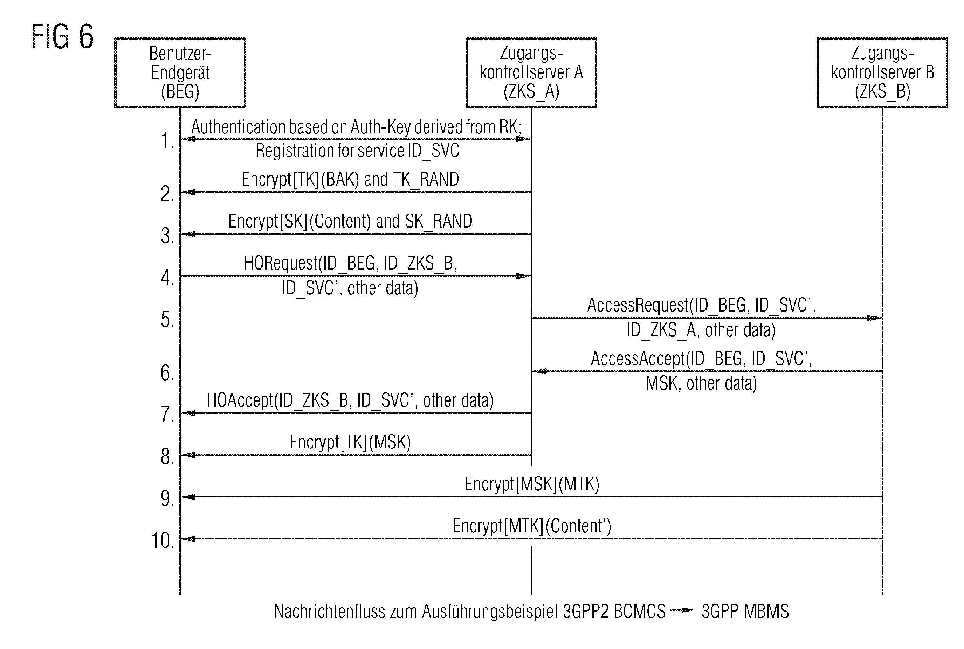

Figur 6 zeigt eine weitere Fallkonstellation, bei der ein mobiles Endgerät BEG von einem 3GPP2-Dienstezugangsnetz zu einem 3GPP-Dienstezugangsnetz wechselt.

Das BEG authentisiert sich dem ZKS_A gegenüber mit Hilfe eines Authentisierungsschlüssels (Auth-Key), der von seinem Registrierungsschlüssel (RK) abgeleitet ist. BEG registriert sich für den Multicast-Dienst ID_SVC, der in den Zuständigkeitsbereich von ZKS_A fällt. BEG erhält den zum Multicast-Dienst ID_SVC gehörenden Broadcast Access Key (BAK), und zwar verschlüsselt mit Hilfe eines Temporary Keys (TK). Daneben empfängt BEG auch noch den Wert TK_RAND, kann dann aus RK sowie TK_RAND den Schlüssel TK berechnen und deshalb BAK entschlüsseln. BEG empfängt die Zufallswerte SK_RAND, aus denen es unter Zuhilfenahme von BAK die Werte der Short-term Keys (SK) bestimmen kann. Damit ist BEG in der Lage, denjenigen Multicast-Dienst (Content) zu entschlüsseln, der mit Hilfe dieser SKs verschlüsselt ist und durch ID_SVC identifiziert wird. Das BEG initiiert eine Übergabe vom Zuständigkeitsbereich des ZKS_A zum ZKS_B, in dem es eine Übergabeanfrage (HORequest = Handover Request) an ZKS_A schickt. Diese Nachricht enthält vorteilhaft die Identität ID_BEG des Benutzerendgerätes bzw. ID_USER des Benutzers, die Identität ID_ZKS_B von ZKS_B, die Identität ID_SVC' eines Multicast-Dienstes im Zuständigkeitsbereich von ZKS_B, sowie eventuell noch weitere relevante Daten. Zugunsten des Benutzerendgerätes schickt ZKS_A eine Zugangskontrollanfrage (AccessRequest) an ZKS_B, die vorteilhaft neben den Identitäten ID_BEG, ID_USER, ID_SVC' und ID_ZKS_A eventuell noch weitere relevante Daten enthält. Basierend auf der Tatsache, dass BEG bei ZKS_A bereits erfolgreich authentisiert und registriert ist, kann ZKS_B ohne eine erneute Authentisierung und Registrierung des BEGes entscheiden, ob er BEG Zugang zum Multicast-Dienst ID_SVC' gewähren will oder nicht. Gewährt ZKS_B dem Benutzerendgerät Zugang zum gewünschten Multicast-Dienst ID_SVC', so sendet er eine Zugangsgewährungsnachricht (AccessAccept) an ZKS_A zusammen mit dem MBMS Service Key MSK, der zu dem gewünschten Multicast-Dienst ID_SVC' gehört. Da ZKS_B dem Benutzerendgerät BEG Zugang zum gewünschten Multicast-Dienst gewährt hat, sendet ZKS_A eine Übergabegewährungsnachricht (HO-Accept = Handover Accept) an BEG. Diese Nachricht enthält vorteilhaft die Identitäten ID_ZKS_B und ID_SVC' des Zugangskontrollservers ZKS_B bzw. des gewünschten Dienstes. ZKS_A sendet an BEG den Schlüssel MSK, den es von ZKS_B enthalten hat, und zwar verschlüsselt mit Hilfe des Temporary Keys TK. Da BEG den Schlüssel TK kennt, kann es den Schlüssel MSK entschlüsseln. Aufgrund seiner Kenntnis von MSK ist BEG nun in der Lage, die mit MSK verschlüsselten MBMS Traffic Keys (MTKs) zu entschlüsseln. Die entschlüsselten MTKs erlauben es dem BEG nun, denjenigen Multicast-Dienst (Content') zu entschlüsseln, der mit Hilfe dieser MTKs verschlüsselt ist und durch ID_SVC' identifiziert wird.

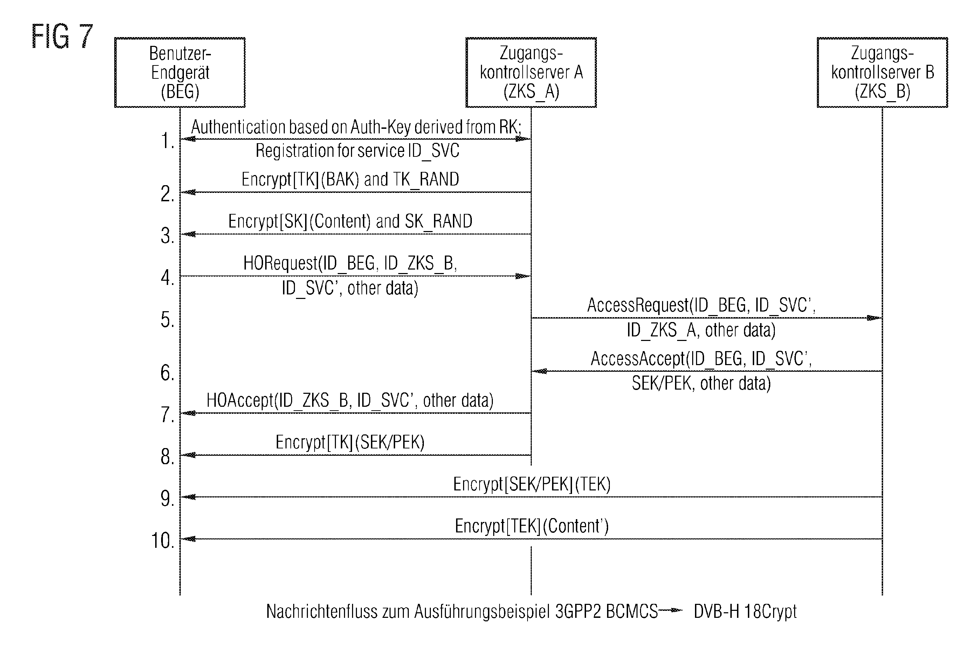

Figur 7 zeigt eine weitere Fallkonstellation, bei der ein mobiles Endgerät BEG von einem 3GPP2-Dienstezugangsnetz zu einem DVB-H-Dienstezugangsnetz wechselt.

Das BEG authentisiert sich dem ZKS_A gegenüber mit Hilfe eines Authentisierungsschlüssels (Auth-Key), der von seinem Registrierungsschlüssel (RK) abgeleitet ist. BEG registriert sich für den Multicast-Dienst ID_SVC, der in den Zuständigkeitsbereich von ZKS_A fällt. BEG erhält den zum Multicast-Dienst ID-SVC gehörenden Broadcast Access Key (BAK), und zwar verschlüsselt mit Hilfe eines Temporary Keys (TK). Daneben empfängt BEG auch noch den Wert TK_RAND, kann dann aus RK sowie TK_RAND den Schlüssel TK berechnen und deshalb BAK entschlüsseln. BEG empfängt die Zufallswerte SK_RAND, aus denen es unter Zuhilfenahme von BAK die Werte der Short-term Keys(SK) bestimmen kann. Damit ist BEG in der Lage, denjenigen Multicast-Dienst (Content) zu entschlüsseln, der mit Hilfe dieser SKs verschlüsselt ist und durch ID_SVC identifiziert wird. Das BEG initiiert eine Übergabe vom Zuständigkeitsbereich des ZKS_A zum ZKS_B, in dem es eine Übergabeanfrage (HORequest = Handover Request) an ZKS_A schickt. Diese Nachricht enthält vorteilhaft die Identität ID_BEG des Benutzerendgerätes bzw. ID_USER des Benutzers, die Identität ID_ZKS_B von ZKS_B, die Identität ID_SVC' eines Multicast-Dienstes im Zuständigkeitsbereich von ZKS_B, sowie eventuell noch weitere relevante Daten. Zugunsten des Benutzerendgerätes schickt ZKS_A eine Zugangskontrollanfrage (AccessRequest) an ZKS_B, die vorteilhaft neben den Identitäten ID_BEG, ID_USER, ID_SVC' und ID_ZKS_A eventuell noch weitere relevante Daten enthält. Basierend auf der Tatsache, dass BEG bei ZKS_A bereits erfolgreich authentisiert und registriert ist, kann ZKS_B ohne eine erneute Authentisierung und Registrierung des BEGes entscheiden, ob er BEG Zugang zum Multicast-Dienst ID_SVC' gewähren will oder nicht. Gewährt ZKS_B dem Benutzerendgerät Zugang zum gewünschten Multicast-Dienst ID_SVC, so sendet er eine Zugangsgewährungsnachricht (AccessAccept) an ZKS_A zusammen mit dem Service oder Programme Encryption Key (SEK/PEK), der zu dem gewünschten Multicast-Dienst ID_SVC' gehört. Da ZKS_B dem Benutzerendgerät BEG Zugang zum gewünschten Multicast-Dienst gewährt hat, sendet ZKS_A eine Übergabegewährungsnachricht (HOAccept = Handover Accept) an BEG. Diese Nachricht enthält vorteilhaft die Identitäten ID_ZKS_B und ID_SVC' des Zugangskontrollservers ZKS_B bzw. des gewünschten Dienstes. ZKS_A sendet an BEG den Schlüssel SEK bzw. PEK, den es von ZKS_B erhalten hat, und zwar verschlüsselt mit Hilfe des Temporary Keys TK. Da BEG den Schlüssel TK kennt, kann es den Schlüssel SEK bzw. PEK entschlüsseln. Aufgrund seiner Kenntnis von SEK bzw. PEK ist BEG nun in der Lage, die mit SEK bzw. PEK verschlüsselten Traffic Encryption Keys (TEKs) zu entschlüsseln. Die entschlüsselten TEKs erlauben es dem BEG nun, denjenigen Multicast-Dienst (Content') zu entschlüsseln, der mit Hilfe dieser TEKs verschlüsselt ist und durch ID_SVC' identifiziert wird.

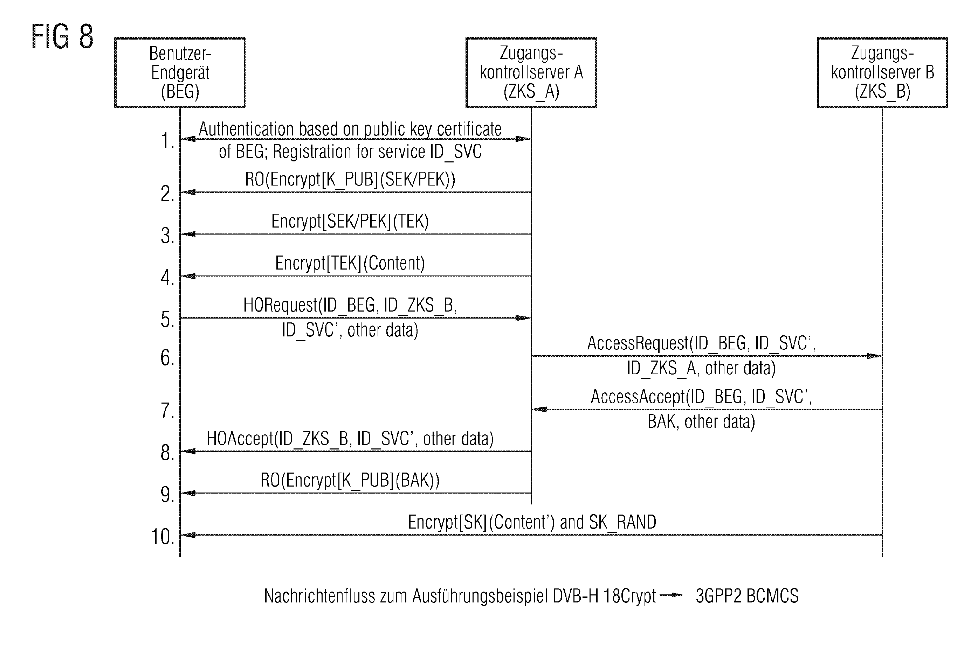

Figur 8 zeigt eine weitere Fallkonstellation, bei der ein mobiles Endgerät von einem DVB-H-Dienstezugangsnetz zu einem 3GPP2-Dienstezugangsnetz wechselt.

Mit Hilfe seines Public Key Zertifikates authentisiert sich BEG gegenüber ZKS_A und registriert sich für den Multicast-Dienst ID_SVC, der in den Zuständigkeitsbereich von ZKS_A fällt. Da sich BEG für den Multicast-Dienst ID_SVC bei ZKS_A erfolgreich registriert hat, sendet ZKS_A den zu diesem Service gehörenden Service oder Programme Encryption Key (SEK/PEK) an BEG. Dabei ist SEK/PEK in einem Rechteobjekt RO enthalten und liegt dort in verschlüsselter Form vor. Zur Verschlüsselung wird der öffentliche Schlüssel K_PUB von BEG verwendet. Mit Hilfe seines privaten Geräteschlüssels K_PRIV kann BEG den Schlüssel SEK bzw. PEK entschlüsseln und somit auch die Traffic Encryption Keys (TEK), die - verschlüsselt mit Hilfe von SEK bzw. PEK - an die Benutzerendgeräte gesendet werden. Die entschlüsselten TEKs erlauben es dem BEG nun, denjenigen Multicast-Dienst (Content) zu entschlüsseln, der mit Hilfe dieser TEKs verschlüsselt ist und durch ID_SVC identifiziert wird. Das BEG initiiert eine Übergabe vom Zuständigkeitsbereich des ZKS_A zum ZKS_B, in dem es eine Übergabeanfrage (HORequest = Handover Request) an ZKS_A schickt. Diese Nachricht enthält vorteilhaft die Identität ID_BEG des Benutzerendgerätes bzw. ID_USER des Benutzers, die Identität ID_ZKS_B von ZKS_B, die Identität ID_SVC' eines Multicast-Dienstes im Zuständigkeitsbereich von ZKS_B, sowie eventuell noch weitere relevante -Daten. Zugunsten des Benutzerendgerätes schickt ZKS_A eine Zugangskontrollanfrage (AccessRequest) an ZKS_B, die vorteilhaft neben den Identitäten ID_BEG, ID_USER, ID_SVC' und ID_ZKS_A eventuell noch weitere relevante Daten enthält. Basierend auf der Tatsache, dass BEG bei ZKS_A bereits erfolgreich authentisiert und registriert ist, kann ZKS_B ohne eine erneute Authentisierung und Registrierung des BEGes entscheiden, ob er BEG Zugang zum Multicast-Dienst ID-SVC' gewähren will oder nicht. Gewährt ZKS_B dem Benutzerendgerät Zugang zum gewünschten Multicast-Dienst ID_SVC', so sendet er eine Zugangsgewährungsnachricht (AccessAccept) an ZKS_A zusammen mit dem Broadcast Access Key (BAK), der zu dem gewünschten Multicast-Dienst ID_SVC' gehört. Da ZKS_B dem Benutzerendgerät BEG Zugang zum gewünschten Multicast-Dienst gewährt hat, sendet ZKS_A eine Übergabegewährungsnachricht (HOAccpt = Handover Accept) an BEG. Diese Nachricht enthält vorteilhaft die Identitäten ID_ZKS_B und ID_SVC' des Zugangskontrollservers ZKS_B bzw. des gewünschten Dienstes. ZKS_A sendet an BEG den Schlüssel BEG den Schlüssel BAK, den es von ZKS_B enthalten hat, und zwar verschlüsselt mit K_PUB, dem öffentlichen Geräteschlüssel von BEG. Da das BEG den zu K_PUB gehörenden privaten Geräteschlüssel K_PRIV kennt, kann es BAK entschlüsseln. Das BEG erhält den Multicast-Dienst, der durch ID-SVC' identifiziert und mit Hilfe von Short-term Keys (SK) verschlüsselt ist. Neben dem verschlüsselten Multicast-Dienst erhält BEG auch noch die unverschlüsselten Zufallswerte SK_RAND. Unter Verwendung von BAK und den Zufallszahlen SK_RAND kann das BEG die Short-term Keys SK berechnen und somit den Multicast-Dienst (Content') entschlüsseln.

Bei den in den Figuren 3 bis 8 dargestellten Ausführungsbeispielen initiiert das Benutzerendgerät BEG die Übergabe bzw. den Wechsel von dem ersten Dienstezugangsnetz DZN-A zu dem zweiten Dienstezugangsnetz DZN-B. Bei alternativen Ausführungsformen wird der Wechsel durch den Zugangskontrollserver ZKS-A oder ZKS_B initiiert.

Bei den dargestellten Ausführungsbeispielen empfängt das Benutzerendgerät BEG zunächst einen Broadcast-Dienst, der in den Zuständigkeitsbereich des ersten Zugangskontrollservers ZKS-A fällt. Dies ist allerdings nicht zwingend erforderlich. Es ist lediglich erforderlich, dass sich das Benutzerendgerät BEG bei dem ersten Zugangskontrollserver ZKS-A authentisiert und registriert.

Den Dateninhalt desjenigen Broadcast- bzw. Multicast-Dienstes, für den das Benutzerendgerät BEG eine Übergabe in den Zuständigkeitsbereich des zweiten Zugangskontrollservers ZKS-B wünscht, d. h. den durch ID_SVC' identifizierten Broadcast-Dienst, können entweder dieselben sein wie die zum Broadcast-Dienst ID_SVC gehörenden Dateninhalte oder die zu einem anderen Broadcast-Dienst gehören. Das erfindungsgemäße Verfahren kann somit auf zweierlei Weise verwendet werden, d. h. einerseits geht der Wechsel der Broadcast-Zugangstechnologie nicht einher mit einem Wechsel auf der Anwendungsebene oder der Wechsel der Broadcast-Zugangstechnologie geht einher mit einem Wechsel auf der Anwendungsebene.

Bei den in Figuren 3 bis 8 dargestellten Ausführungsbeispielen erhalten die Zugriffsbestätigungsnachrichten (Access Accept), die von dem zweiten Zugangskontrollserver ZKS-B zu dem ersten Zugangskontrollserver ZKS-A geschickt werden, den Schlüssel (MSK, SEK/PEK, BAK), deren Kenntnis die Entschlüsselung eines Broadcast-Dienstes ermöglicht. Deshalb werden diese Nachrichten vorzugsweise durch geeignete Maßnahmen, beispielsweise durch Verschlüsselung gegen unbefugtes Abhören geschützt. Alternativ kann in der Zugriffsbestätigungsnachricht (Access Accept) auch auf den Schlüssel (MSK, SEK/PEK bzw. BAK) verzichtet werden und statt dessen ein Identifizierer für diesen Schlüssel gesendet werden, der es dem ersten Zugangskontrollserver ZKS-A ermöglicht, den zugehörigen Schlüssel von einer Datenbank abzufragen in der dieser Schlüssel hinterlegt ist.

Handelt es sich bei dem ersten Dienstezugangsnetz DZN-A um ein 3GPP-Dienstezugangsnetz, wird der dienstspezifische Schlüssel der zweiten Zugangstechnologie, d. h. SEK/PEK bei DVB-H 18Crypt und BAK bei 3GPP2-BCMSCS direkt mit dem MUK, dem teilnehmerspezifischen MBMS-Userkey verschlüsselt und an das Benutzerendgerät BEG geschickt. Soll der Anwendungsbereich des teilnehmerspezifischen Schlüssel MUK nicht in dieser Weise ausgedehnt werden, dann wird bei einer Ausführungsform der Schlüssel MUK nur als Eingabe zur Berechnung eines neuen Schlüssels K eingesetzt, der an Stelle des teilnehmerspezifischen Schlüssels MUK zur Verschlüsselung von SEK/PEK bzw. BRK dient. Bei einer Ausführungsform hängt dabei die Berechnung des Schlüssels K noch von weiteren Daten, wie beispielsweise der Identität des zweiten Zugangskontrollservers ZKS-B, dessen IP-Adresse und von einer Zufallszahl ab. Eine weitere Möglichkeit zur Berechnung des Schlüssels stellen schlüsselabhängige HASH-Funktionen dar.

Bei dem erfindungsgemäßen System übernehmen die Zugangskontrollserver ZKS-A, ZKS-B mehrere Funktionen, beispielsweise die Authentisierung, Registrierung, Schlüsselverteilung, Datenverschlüsselung, das Empfangen und das Versenden von Nachrichten zur Übergabe von Zugangskontrollfunktionen. Diese Funktionen werden bei einer alternativen Ausführungsform des erfindungsgemäßen Systems nicht von einem einzigen Server übernommen, sondern können auf verschiedene Server verteilt werden.

Durch die Zusammenarbeit der Zugangskontrollserver ZKS-A, ZKS-B, die den Zugang zu Broadcast-Diensten kontrollieren, wird ein schneller und benutzerfreundlicher Übergang von einer Broadcast-Zugangstechnologie zu einer anderen unterstützt, ohne dass sich ein Teilnehmer eines mobilen Endgeräts BEG jeweils bei jedem Zugangskontrollserver ZKS in dessen Zuständigkeitsbereich, der den Broadcast-Dienst empfangen möchte, neu authentisieren und registrieren muss.

## Patentansprüche

1. Verfahren zum kontinuierlichen Übertragen von verschlüsselten Daten eines Broadcast-Dienstes von Dienstezugangsnetzen, die unterschiedliche Schlüsselhierarchien aufweisen, an ein mobiles Endgerät (BEG),
wobei das mobile Endgerät (BEG) bei einem Wechsel von einem ersten Dienstezugangsnetz (DZN-A), von dem das mobile Endgerät (BEG) die Daten des Broadcast-Dienstes mit einem ersten Dateninhaltsverschlüsselungsschlüssel (MTK; TEK; SK) verschlüsselt empfängt, zu einem zweiten Dienstezugangsnetz (DZN-B), von dem das mobile Endgerät (BEG) die Daten des Broadcast-Dienstes mit einem zweiten Dateninhaltsverschlüsselungsschlüssel (MTK; TEK; SK) verschlüsselt empfängt,
einen mit einem teilnehmerspezifischen Schlüssel (MUK; K-PUB; TK) des ersten Dienstezugangsnetzes (DZN-A) verschlüsselten Schlüssel (SEK; PEK; MSK; BAK) der Schlüsselhierarchie des zweiten Dienstezugangsnetzes (DZN-B) empfängt.

2. Verfahren nach Anspruch 1,
wobei der teilnehmerspezifische Schlüssel (MUK; TK) im Anschluss an eine Authentisierung des mobilen Endgeräts (BEG) bei einem Zugangskontrollserver (ZKS-A) des ersten Dienstezugangsnetzes (DZN-A) erzeugt wird.

3. Verfahren nach Anspruch 1,
wobei das mobile Endgerät (BEG) und der Zugangskontrollserver (ZKS-A) des ersten Dienstezugangsnetzes (DZN-A) beide über den teilnehmerspezifischen Schlüssel (MUK; K-PUB; TK) verfügen.

4. Verfahren nach Anspruch 1,
wobei das mobile Endgerät (BEG) die Daten des Broadcast-Dienstes mit dem ersten DateninhaltsverschlüsselungsSchlüssel (MTK; TEK; SK) von einem ersten Zugangskontrollserver (ZKS-A) des ersten Dienstezugangsnetzes (DZN-A) verschlüsselt empfängt.

5. Verfahren nach Anspruch 1,
wobei das mobile Endgerät (BEG) die Daten des Broadcast-Dienstes mit dem zweiten DateninhaltsverschlüsselungsSchlüssel (MTK; TEK; SK) von einem zweiten Zugangskontrollserver (ZKS-B) des zweiten Dienstezugangsnetzes (DZN-B) verschlüsselt empfängt.

6. Verfahren nach Anspruch 1,
wobei der mit dem teilnehmerspezifischen Schlüssel (MUK; K-PUB; TK) verschlüsselte Schlüssel (SEK; PEK; MSK; BAK) von dem Zugangskontrollserver (ZKS-A) des ersten Dienstezugangsnetzes (DZN-A) an das mobile Endgerät (BEG) übertragen wird und durch das mobile Endgerät (BEG) mittels des dem mobilen Endgerät (BEG) bekannten teilnehmerspezifischen Schlüssels (MUK; K-PRIV; TK) entschlüsselt wird.

7. Verfahren nach Anspruch 6,
wobei das mobile Endgerät (BEG) mittels des entschlüsselten Schlüssels (SEK; PEK; MSK; BAK) den zweiten Dateninhaltsverschlüsselungs-Schlüssel (MTK; TEK; SK) entschlüsselt oder ableitet, um damit die von dem zweiten Zugangskontrollserver (ZKS-B) empfangenen, mit dem zweiten Dateninhaltsverschlüsselungs-Schlüssel (MTK; TEK; SK) verschlüsselten Daten des Broadcast-Dienstes zu entschlüsseln.

8. Verfahren nach Anspruch 1,
wobei das mobile Endgerät (BEG) einen Wechsel von dem ersten Dienstezugangsnetz (DZN-A) zu dem zweiten Dienstezugangsnetz (DZN-B) von dem Zugangskontrollserver (ZKS-A) des ersten Dienstezugangsnetzes (DZN-A) mittels einer Anforderungsnachricht (HO-Request) anfordert.

9. Verfahren nach Anspruch 8,
wobei die Anforderungsnachricht (HO-Request) eine Teilnehmeridentität, eine Identität des Zugangskontrollservers (ZKS-B) des zweiten Dienstezugangsnetzes (DZN-B) und eine Identität des Broadcast-Dienstes aufweist.

10. Verfahren nach Anspruch 9,
wobei der Zugangskontrollserver (ZKS-A) des ersten Dienstezugangsnetzes (DZN-A) eine Zugriffsanforderungsnachricht (Access Request) an den Zugangskontrollserver (ZKS-B) des zweiten Dienstezugangsnetzes (DZN-B) überträgt, welche die Teilnehmeridentität, die Identität des Broadcast-Dienstes und eine Identität des Zugangskontrollservers (ZKS-A) des ersten Dienstezugangsnetzes (DZN-A) enthält.

11. Verfahren nach Anspruch 10,
wobei der Zugangskontrollserver (ZKS-B) des zweites Dienstezugangsnetzes (DZN-B) eine Zugriffsbestätigungsnachricht (Access Accept) an den Zugangskontrollserver (ZKS-A) des ersten Dienstezugangsnetzes (DZN-A) zurücküberträgt, welche die Teilnehmeridentität, die Identität des Broadcast-Dienstes und einen Schlüssel (SEK; PEK; MSK; BAK) der Schlüsselhierarchie des zweiten Dienstezugangsnetzes (DZN-B) enthält.

12. Verfahren nach Anspruch 11,
wobei der Zugangskontrollserver (ZKS-A) des ersten Dienstezugangsnetzes (DZN-A) eine Wechselbestätigungsnachricht (HO-Accept) an das mobile Endgerät (BEG) überträgt, welche eine Identität des zweiten Zugangskontrollservers (ZKS-B) und eine Identität des Broadcast-Dienstes enthält.

13. Verfahren nach Anspruch 12,
wobei der Zugangskontrollserver (ZKS-A) des ersten Dienstezugangsnetzes (DZN-A) den mit dem teilnehmerspezifischen Schlüssel (MUK; K-PUB; TK) verschlüsselten Schlüssel (SEK; PK; MSK; BAK) der zweiten Schlüsselhierarchie in einer Nachricht an das mobile Endgerät (BEG) überträgt.

14. Verfahren nach Anspruch 1,
wobei das erste Dienstezugangsnetz (DZN-A) durch ein 3GPP-, ein 3GPP2- oder ein DVB-H-Dienstezugangsnetz gebildet wird.

15. Verfahren nach Anspruch 1,
wobei das zweite Dienstezugangsnetz (DZN-B) durch ein 3GPP-, ein 3GPP2- oder ein DVB-H-Dienstezugangsnetz gebildet wird.

16. Verfahren nach Anspruch 1,
wobei der Wechsel von dem ersten Dienstezugangsnetz (DZN-A) zu dem zweiten Dienstezugangsnetz (DZN-B) durch den Zugangskontrollserver (ZKS-A) des ersten Dienstezugangsnetzes automatisch durchgeführt wird, wenn sich das mobile Endgerät (BEG) aus einer Sendereichweite des ersten Dienstezugangsnetzes (DZN-A) herausbewegt.

17. Verfahren nach Anspruch 1,
wobei das mobile Endgerät (BEG) durch ein mobiles Telefon, einen Laptop oder ein PDA-Gerät gebildet wird.

18. Verfahren nach Anspruch 1,
wobei die durch das mobile Endgerät (BEG) empfangenen Daten durch Multimediadaten gebildet werden.

19. System zum kontinuierlichen Übertragen von verschlüsselten Daten eines Broadcast-Dienstes an ein mobiles Endgerät (BEG) von Dienstezugangsnetzen, die unterschiedliche Schlüsselhierarchien aufweisen, mit:
(a) einem mobilen Endgerät (BEG); (b) einem ersten Zugangskontrollserver (ZKS-A) eines ersten Dienstezugangsnetzes (DZN-A), welches eine erste Schlüsselhierarchie aufweist,
wobei das mobile Endgerät (BEG) dazu eingerichtet ist, die Daten des Broadcast-Dienstes mit einem ersten Dateninhaltverschlüsselungs-Schlüssel (MTK; TEK; SK) von dem ersten Zugangskontrollserver (ZKS-A) des ersten Dienstezugangsnetzes (DZN-A) verschlüsselt zu empfangen;
(b) einem zweiten Zugangskontrollserver (ZKS-B) eines zweiten Dienstezugangsnetzes (DZN-B), welches eine zweite Schlüsselhierarchie aufweist,
wobei das mobile Endgerät (BEG) dazu eingerichtet ist, die Daten des Broadcast-Dienstes mit einem zweiten Dateninhaltsverschlüsselungsschlüssel (MTK; TEK; SK) von dem zweiten Zugangskontrollserver (ZKS-B) des zweiten Dienstezugangsnetzes (DZN-B) verschlüsselt zu empfangen;
(c) wobei das mobile Endgerät (BEG) weiter dazu eingerichtet ist, bei einem Wechsel von dem ersten Dienstezugangsnetz (DZN-A) zu dem zweiten Dienstezugangsnetz (DZN-B) einen mit einem teilnehmerspezifischen Schlüssel (MUK; K-PUB; TK) des ersten Dienstezugangsnetzes (DZN-A) verschlüsselten Schlüssel (SEK; PEK; MSK; BAK) der Schlüsselhierarchie des zweiten Dienstezugangsnetzes (DZN-B) zu erhalten.

20. System nach Anspruch 19,
wobei der erste Zugangskontrollserver (ZKS-A) des ersten Dienstezugangsnetzes (DZN-A) dazu eingerichtet ist, den mit dem teilnehmerspezifischen Schlüssel (MUK; K-PUB; TK) verschlüsselten Schlüssel (SEK; PK; MSK; BAK) an das mobile Endgerät (BEG) zu übertragen und das mobile Endgerät (BEG) dazu eingerichtet ist, den verschlüsselten Schlüssel mittels des dem mobilen Endgerät (BEG) bekannten teilnehmerspezifischen Schlüssels (MUK; K-PRIV; TK) zu entschlüsseln.

21. System nach Anspruch 20,
wobei das mobile Endgerät (BEG) dazu eingerichtet ist, den zweiten Dateninhaltsverschlüsselungsschlüssel (MTK; TEK; SK) mittels des entschlüsselten Schlüssels (SEK; PK; MSK; BAK) zu entschlüsseln oder abzuleiten, und damit die von dem zweiten Zugangskontrollserver (ZKS-B) empfangenen, mit dem zweiten Dateninhaltsverschlüsselungsschlüssel (MTK; TEK; SK) verschlüsselten Daten des Broadcast-Dienstes zu entschlüsseln.

22. Zugangskontrollserver (ZKS) zum Bereitstellen eines kontinuierlichen Broadcast-Dienstes für ein mobiles Endgerät (BEG), wobei der Zugangskontrollserver (ZKS) dazu eingerichtet ist, bei einem Wechsel des mobilen Endgeräts (BEG) von einem Dienstezugangsnetz (DZN) des Zugangskontrollservers (ZKS) zu einem anderen Dienstezugangsnetz DZN') einen mit einem teilnehmerspezifischen Schlüssel (MUK; K-PUB; TK) des Dienstezugangsnetzes (DZN) verschlüsselten Schlüssel (SEK; PEK; MSK; BAK) des zweiten Dienstezugangsnetzes (DZN`) an das mobile Endgerät (BEG) zu übertragen.

## Claims

1. Method for continuously transmitting encrypted data of a broadcast service from service access networks having different key hierarchies to a mobile terminal (BEG),
wherein the mobile terminal (BEG), on changing over from a first service access network (DZN-A) from which it receives the broadcast service's data encrypted by means of a first data content encryption key (MTK; TEK; SK) to a second service access network (DZN-B) from which it receives the broadcast service's data encrypted by means of a second data content encryption key (MTK; TEK; SK), receives a key (SEK; PEK; MSK; BAK) - encrypted by means of a user-specific key (MUK; K-PUB; TK) of the first service access network (DZN-A) - of the key hierarchy of the second service access network (DZN-B).

2. Method according to claim 1,
wherein the user-specific key (MUK; TK) is generated directly after the mobile terminal (BEG) has been authenticated to an access control server (ZKS-A) of the first service access network (DZN-A).

3. Method according to claim 1,
wherein the mobile terminal (BEG) and the access control server (ZKS-A) of the first service access network (DZN-A) both have the user-specific key (MUK; K-PUB; TK).

4. Method according to claim 1,
wherein the mobile terminal (BEG) receives the broadcast service's data encrypted by means of the first data content encryption key (MTK; TEK; SK) from a first access control server (ZKS-A) of the first service access network (DZN-A).

5. Method according to claim 1,
wherein the mobile terminal (BEG) receives the broadcast service's data encrypted by means of the second data content encryption key (MTK; TEK; SK) from a second access control server (ZKS-B) of the second service access network (DZN-B).

6. Method according to claim 1,
wherein the key (SEK; PEK; MSK; BAK) encrypted by means of the user-specific key (MUK; KPUB; TK) is transmitted from the access control server (ZKS-A) of the first service access network (DZN-A) to the mobile terminal (BEG) and decrypted by the mobile terminal (BEG) by means of the user-specific key (MUK; K-PRIV; TK) known to the mobile terminal (BEG).

7. Method according to claim 6,
wherein by means of the key (SEK; PEK; MSK; BAK) that has been decrypted the mobile terminal (BEG) decrypts or derives the second data content encryption key (MTK; TEK; SK) in order therewith to decrypt the broadcast service's data received from the second access control server (ZKS-B) and encrypted by means of the second data content encryption key (MTK; TEK; SK).

8. Method according to claim 1,
wherein the mobile terminal (BEG) requests a changeover from the first service access network (DZN-A) to the second service access network (DZN-B) from the access control server (ZKS-A) of the first service access network (DZN-A) by means of a request message (HO-Request).

9. Method according to claim 8,
wherein the request message (HO-Request) has a user identity, an identity of the access control server (ZKS-B) of the second service access network (DZN-B), and an identity of the broadcast service.

10. Method according to claim 9,
wherein the access control server (ZKS-A) of the first service access network (DZN-A) transmits an access request message (AccessRequest) to the access control server (ZKS-B) of the second service access network (DZN-B), which message contains the user identity, the identity of the broadcast service, and an identity of the access control server (ZKS-A) of the first service access network (DZN-A).

11. Method according to claim 10,
wherein the access control server (ZKS-B) of the second service access network (DZN-B) sends back an access confirmation message (AccessAccept) to the access control server (ZKS-A) of the first service access network (DZN-A), which message contains the user identity, the identity of the broadcast service, and a key (SEK; PEK; MSK; BAK) of the key hierarchy of the second service access network (DZN-B).

12. Method according to claim 11,
wherein the access control server (ZKS-A) of the first service access network (DZN-A) transmits a changeover confirmation message (HOAccept) to the mobile terminal (BEG), which message contains an identity of the second access control servers (ZKS-B) and an identity of the broadcast service.

13. Method according to claim 12,
wherein the access control server (ZKS-A) of the first service access network (DZN-A) transmits the key (SEK; PK; MSK; BAK) - encrypted by means of the user-specific key (MUK; K-PUB; TK) - of the second key hierarchy in a message to the mobile terminal (BEG).

14. Method according to claim 1,
wherein the first service access network (DZN-A) is formed by means of 3GPP, 3GPP2 or DVB-H service access network.

15. Method according to claim 1,
wherein the second service access network (DZN-B) is formed by means of a 3GPP, 3GPP2 or DVB-H service access network.

16. Method according to claim 1,
wherein the changeover from the first service access network (DZN-A) to the second service access network (DZN-B) will be performed automatically by the access control server (ZKS-A) of the first service access network when the mobile terminal (BEG) moves out of a transmitting range of the first service access network (DZN-A).

17. Method according to claim 1,
wherein the mobile terminal (BEG) is formed by means of a mobile telephone, a laptop or a PDA device.

18. Method according to claim 1,
wherein the data received by the mobile terminal (BEG) is formed by means of multimedia data.

19. System for continuously transmitting encrypted data of a broadcast service to a mobile terminal (BEG) from service access networks that have different key hierarchies, having:
(a) a mobile terminal (BEG);
(b) a first access control server (ZKS-A) of a first service access network (DZN-A) that has a first key hierarchy with the mobile terminal (BEG) being configured to receive the broadcast service's data encrypted by means of a first data content encryption key (MTK; TEK; SK) from the first access control server (ZKS-A) of the first service access network (DZN-A);
(b) a second access control server (ZKS-B) of a second service access network (DZN-B) that has a second key hierarchy
with the mobile terminal (BEG) being configured to receive the broadcast service's data encrypted by means of a second data content encryption key (MTK; TEK; SK) from the second access control server (ZKS-B) of the second service access network (DZN-B);
(c) with the mobile terminal (BEG) further being configured to receive a key (SEK; PEK; MSK; BAK) - encrypted by means of a user-specific key (MUK; K-PUB; TK) of the first service access network (DZN-A) - of the key hierarchy of the second service access network (DZN-B) on changing over from the first service access network (DZN-A) to the second service access network (DZN-B).

20. System according to claim 19,
wherein the first access control server (ZKS-A) of the first service access network (DZN-A) is configured to transmit the key (SEK; PK; MSK; BAK) encrypted by means of the user-specific key (MUK; KPUB; TK) to the mobile terminal (BEG) and the mobile terminal (BEG) is configured to decrypt the encrypted key by means of the user-specific key (MUK; K-PRIV; TK) known to the mobile terminal (BEG).

21. System according to claim 20,
wherein the mobile terminal (BEG) is configured to decrypt or derive the second data content encryption key (MTK; TEK; SK) by means of the key (SEK; PK; MSK; BAK) that has been decrypted and to decrypt the broadcast service's data received from the second access control server (ZKS-B) and encrypted by means of the second data content encryption key (MTK; TEK; SK).

22. Access control server (ZKS) for provisioning a continuous broadcast service for a mobile terminal (BEG), wherein the access control server (ZKS) is configured to transmit a key (SEK; PEK; MSK; BAK) - encrypted by means of a user-specific key (MUK; K-PUB; TK) of the service access network (DZN) - of the second service access network (DZN') to the mobile terminal (BEG) when said terminal changes over from a service access network (DZN) of the access control server (ZKS) to another service access network (DZN').

## Revendications

1. Procédé de transmission continue de données codées d'un service de diffusion de réseaux d'accès à des services, qui présentent différentes hiérarchies de codes, à un terminal mobile (BEG),
dans lequel le terminal mobile (BEG), lors d'un changement d'un premier réseau d'accès à des services (DZN-A), duquel le terminal mobile (BEG) reçoit sous forme codée les données du service de diffusion avec un premier code de codage du contenu de données (MTK; TEK; SK), à un deuxième réseau d'accès à des services (DZN-B), duquel le terminal mobile (BEG) reçoit sous forme codée les données du service de diffusion avec un deuxième code de codage du contenu de données (MTK; TEK; SK),
reçoit un code (SEK; PEK; MSK; BAK) de la hiérarchie de codes du deuxième réseau d'accès à des services (DZN-B) codé avec un code spécifique d'abonné (MUK; K-PUB; TK) du premier réseau d'accès à des services (DZN-A).

2. Procédé selon la revendication 1, dans lequel on produit le code spécifique d'abonné (MUK; TK) à la suite d'une authentification du terminal mobile (BEG) auprès d'un serveur de contrôle d'accès (ZKS-A) du premier réseau d'accès à des services (DZN-A).

3. Procédé selon la revendication 1, dans lequel le terminal mobile (BEG) et le serveur de contrôle d'accès (ZKS-A) du premier réseau d'accès à des services (DZN-A) disposent tous les deux du code spécifique d'abonné (MUK; K-PUB; TK).

4. Procédé selon la revendication 1, dans lequel le terminal mobile (BEG) reçoit sous forme codée les données du service de diffusion avec le premier code de codage du contenu de données (MTK; TEK; SK) d'un premier serveur de contrôle d'accès (ZKS-A) du premier réseau d'accès à des services (DZN-A).

5. Procédé selon la revendication 1, dans lequel le terminal mobile (BEG) reçoit sous forme codée les données du service de diffusion avec le deuxième code de codage du contenu de données (MTK; TEK; SK) d'un deuxième serveur de contrôle d'accès (ZKS-B) du deuxième réseau d'accès à des services (DZN-B).

6. Procédé selon la revendication 1, dans lequel on transmet le code (SEK; PK; MSK; BAK) codé avec le code spécifique d'abonné (MUK; K-PUB; TK) du serveur de contrôle d'accès (ZKS-A) du premier réseau d'accès à des services (DZN-A) au terminal mobile (BEG) et on le décode avec le terminal mobile (BEG) au moyen du code spécifique d'abonné (MUK; K-PRIV; TK) connu du terminal mobile (BEG).

7. Procédé selon la revendication 6, dans lequel le terminal mobile (BEG) décode ou déduit au moyen du code décodé (SEK; PEK; MSK; BAK) le deuxième code de codage du contenu de données (MTK; TEK; SK) afin de décoder avec celui-ci les données du service de diffusion codées avec le deuxième code de codage du contenu de données (MTK; TEK; SK) reçues du deuxième serveur de contrôle d'accès (ZKS-B).

8. Procédé selon la revendication 1, dans lequel le terminal mobile (BEG) demande un changement d'un premier réseau d'accès à des services (DZN-A) à un deuxième réseau d'accès à des services (DZN-B) par le serveur de contrôle d'accès (ZKS-A) du premier réseau d'accès à des services (DZN-A) au moyen d'un message de demande (HO-Request).

9. Procédé selon la revendication 8, dans lequel le message de demande (HO-Request) présente une identité d'abonné, une identité du serveur de contrôle d'accès (ZKS-B) du deuxième réseau d'accès à des services (DZN-B) et une identité du service de diffusion.

10. Procédé selon la revendication 9, dans lequel le serveur de contrôle d'accès (ZKS-A) du premier réseau d'accès à des services (DZN-A) transmet au serveur de contrôle d'accès (ZKS-B) du deuxième réseau accès à des services (DZN-B), un message de demande d'accès (Access Request) qui contient l'identité de l'abonné, l'identité du service de diffusion et une identité du serveur de contrôle d'accès (ZKS-A) du premier réseau d'accès à des services (DZN-A).

11. Procédé selon la revendication 10, dans lequel le serveur de contrôle d'accès (ZKS-B) du deuxième réseau d'accès à des services (DZN-B) retransmet au serveur de contrôle d'accès (ZKS-A) du premier réseau d'accès à des services (DZN-A), un message de confirmation d'accès (Access Accept) qui contient l'identité de l'abonné, l'identité du service de diffusion et un code (SEK; PEK; MSK; BAK) de la hiérarchie de codes du deuxième réseau d'accès à des services (DZN-B).

12. Procédé selon la revendication 11, dans lequel le serveur de contrôle d'accès (ZKS-A) du premier réseau d'accès à des services (DZN-A) transmet au terminal mobile (BEG) un message de confirmation de changement (HO-Accept), qui contient une identité du deuxième serveur de contrôle d'accès (ZKS-B) et une identité du service de diffusion.

13. Procédé selon la revendication 12, dans lequel le serveur de contrôle d'accès (ZKS-A) du premier réseau d'accès à des services (DZN-A) transmet le code codé (SEK; PK; MSK; BAK) de la deuxième hiérarchie de codes avec le code spécifique d'abonné (MUK; K-PUB; TK) dans un message au terminal mobile (BEG).

14. Procédé selon la revendication 1, dans lequel le premier réseau d'accès à des services (DZN-A) est formé par un réseau d'accès à des services 3GPP, 3GPP2 ou DVB-H.

15. Procédé selon la revendication 1, dans lequel le deuxième réseau d'accès à des services (DZN-B) est formé par un réseau d'accès à des services 3GPP, 3GPP2 ou DVB-H.

16. Procédé selon la revendication 1, dans lequel le changement du premier réseau d'accès à des services (DZN-A) au deuxième réseau d'accès à des services (DZN-B) est effectué automatiquement par le serveur de contrôle d'accès (ZKS-A) du premier réseau d'accès à des services, lorsque le terminal mobile (BEG) se déplace hors de la portée d'émission du premier réseau d'accès à des services (DZN-A).

17. Procédé selon la revendication 1, dans lequel le terminal mobile (BEG) est formé par un téléphone mobile, un ordinateur portable ou un assistant numérique personnel PDA.

18. Procédé selon la revendication 1, dans lequel les données reçues par le terminal mobile (BEG) sont formées par des données multimédia.

19. Système de transmission continue de données codées d'un service de diffusion de réseaux d'accès à des services, qui présentent différentes hiérarchies de codes, à un terminal mobile (BEG), avec:
(a) un terminal mobile (BEG);
(b) un premier serveur de contrôle d'accès (ZKS-A) d'un premier réseau d'accès à des services (DZN-A), qui présente une première hiérarchie de codes,
dans lequel le terminal mobile (BEG) est conçu pour recevoir sous forme codée les données du service de diffusion avec un premier code de codage du contenu de données (MTK; TEK; SK) en provenance du premier serveur de contrôle d'accès (ZKS-A) du premier réseau d'accès à des services (DZN-A);
(b) un deuxième serveur de contrôle d'accès (ZKS-B) d'un deuxième réseau d'accès à des services (DZN-B), qui présente une deuxième hiérarchie de codes,
dans lequel le terminal mobile (BEG) est conçu pour recevoir sous forme codée les données du service de diffusion avec un deuxième code de codage du contenu de données (MTK; TEK; SK) en provenance du deuxième serveur de contrôle d'accès (ZKS-B) du deuxième réseau d'accès à des services (DZN-B);
(c) dans lequel le terminal mobile (BEG) est en outre conçu pour recevoir, lors d'un changement du premier réseau d'accès à des services (DZN-A) au deuxième réseau d'accès à des services (DZN-B), un code (SEK; PEK; MSK; BAK) de la hiérarchie de codes du deuxième réseau d'accès à des services (DZN-B), codé avec un code spécifique d'abonné (MUK; K-PUB; TK) du premier réseau d'accès à des services (DZN-A).

20. Système selon la revendication 19, dans lequel le premier serveur de contrôle d'accès (ZKS-A) du premier réseau d'accès à des services (DZN-A) est conçu pour transmettre au terminal mobile (BEG) le code (SEK; PK; MSK; BAK) codé avec le code spécifique d'abonné (MUK; K-PUB; TK) et le terminal mobile (BEG) est conçu pour décoder le code codé au moyen du code spécifique d'abonné (MUK; K-PRIV; TK) connu du terminal mobile (BEG).

21. Système selon la revendication 20, dans lequel le terminal mobile (BEG) est conçu pour décoder ou déduire le deuxième code de codage du contenu de données (MTK; TEK; SK) au moyen du code décodé (SEK; PK; MSK; BAK) et pour décoder avec celui-ci les données du service de diffusion codées avec le deuxième code de codage du contenu de données (MTK; TEK; SK) reçues du deuxième serveur de contrôle d'accès (ZKS-B).

22. Serveur de contrôle d'accès (ZKS) permettant de mettre à disposition un service de diffusion continu pour un terminal mobile (BEG), dans lequel le serveur de contrôle d'accès (ZKS) est conçu pour transmettre au terminal mobile (BEG), lors d'un changement du terminal mobile (BEG) d'un réseau d'accès à des services (DZN) du serveur de contrôle d'accès (ZKS) à un autre réseau d'accès à des services (DZN'), un code (SEK; PEK; MSK; BAK) du deuxième réseau d'accès à des services (DZN') codé avec un code spécifique d'abonné (MUK; K-PUB; TK) du réseau d'accès à des services (DZN).
